# EUROPEAN PATENT APPLICATION

(11) **EP 4 446 620 A1**
(43) Date of publication of application: **16.10.2024**
(21) Application number: 22907554.4
(22) Date of filing: 16.12.2022
(51) Int. Cl.: F16H 61/08, F16H 61/682, F16H 63/50

(54) **DOG CLUTCH-TYPE TRANSMISSION DEVICE**

(30) Priority: 17.12.2021 WO PCT/JP2021/046807
(71) Applicant: Yamaha Hatsudoki Kabushiki Kaisha, Iwata-shi, Shizuoka 438-8501 (JP)
(72) Inventor: MINAMI, Kengo, Iwata-shi, Shizuoka 438-8501 (JP); TAMEMASA, Takuma, Iwata-shi, Shizuoka 438-8501 (JP)
(74) Representative: Stöckeler, Ferdinand
(86) International application number: PCT/JP2022/046537
(87) International publication number: WO 2023/113032

(57) **Abstract**

In a speed change control device (50) of a dog clutch-type automatic transmission including a clutch actuator (60) that controls a clutch (44), a transmission (48) that performs switching of gears, a motive power source-torque adjustment device (80) that adjusts a torque of a motive power source (45) during a speed change, and a control device (90) that controls the clutch actuator (60) and the motive power source-torque adjustment device (80), when a speed change command is generated, the control device (90) controls both the clutch actuator (60) and the motive power source-torque adjustment device (80) upon receiving an upshift command such that an action pattern of the clutch (44) and an adjustment pattern of the torque of the motive power source (45) differ between a high-speed, high-torque driving force state and a low-speed, low-torque driving force state during a period from start of a dog disengaging action of a driving dog and a driven dog until completion of a dog engaging action thereof.

## Description

### TECHNICAL FIELD

The present teaching relates to a dog clutch-type speed change device.

### BACKGROUND ART

Conventionally, there is a known speed change control device that includes a so-called dog-type transmission and performs a series of speed change actions by an actuator. Specifically, there is a known speed change control device that performs a series of speed change actions consisting of disconnecting a clutch, changing a gear position of a transmission, and connecting the clutch, by using an actuator, such as an electric motor.

Patent Literature 1 discloses a technology that, in a dog clutch-type automatic transmission, switches contents of control of a clutch actuator during a speed change according to predetermined driving conditions, such as an accelerator operation amount and a vehicle speed, during a speed change operation. Specifically, as specifications of the clutch, there are specifications A in which a half-clutching state is maintained when the clutch changes from a disconnected state to a connected state, specifications B in which the half-clutching state is not maintained when the clutch changes from the disconnected state to the connected state, and specifications C in which the clutch is not disconnected. The contents of the control are switched to the specifications A when the accelerator operation amount is small (the vehicle speed is low) under fully automatic control, to the specifications B when the accelerator operation amount is large (the vehicle speed is high) under the fully automatic control or the accelerator operation amount is small (the vehicle speed is low) under semi-automatic control, and to the specifications C when the accelerator operation amount is large (the vehicle speed is high) under the semi-automatic control in an electric speed change device (dog clutch) that performs a shift to a higher gear and connection and disconnection of the clutch by an electric motor. Thus, by switching the contents of the control of the clutch during a speed change according to the driving conditions of the vehicle, such as the accelerator operation amount and the vehicle speed, a highly sporty speed change action with a shortened speed change time and a highly comfortable speed change action are switched. Thus, according to Patent Literature 1, only an action pattern of changing the state of the clutch is changed according to the driving state of the motive power source during a speed change.

Patent Literature 2 discloses a technology that selects a first speed change mode, a second speed change mode, and a third speed change mode according to driving situations of a motorcycle that are classified based on contents of a shift operation (an upshift operation/a downshift operation) by a driver and a travel state (a driving state/a boundary state/a driven state) of the motorcycle. Here, the first speed change mode is a mode in which an engine output is temporarily adjusted while a clutch is switched to a disconnected state, a half-clutching state, and a connected state in this order. The second speed change mode is a mode in which the engine output is temporarily adjusted while the clutch is maintained in the connected state. The third speed change mode is a mode in which the clutch is maintained in the connected state without the engine output being adjusted. Thus, according to Patent Literature 2, depending on a driving state of a motive power source, an action pattern is executed in which the connection state of the clutch is not changed in the course of a speed change.

### Citation List

### Patent Literature

[Patent Literature 1] Japanese Unexamined Patent Application Publication No. 2010-117005
[Patent Literature 2] Japanese Unexamined Patent Application Publication No. 2018-103928

### SUMMARY OF THE TEACHING

### Technical Problem

In a dog clutch-type automatic transmission, it is necessary to perform dog disengagement of a driving dog and a driven dog of a current stage of speed in the course of a speed change. Further, there is a possibility that, during an engaging action of a driving dog and a driven dog of the next stage of speed, dog contact of the driving dog and the driven dog coming into contact may occur or partial engagement of the driving dog and the driven dog of the next stage of speed may occur. If disengagement of the dogs cannot be smoothly performed and/or dog contact or partial engagement of the dogs cannot be reliably eliminated, a problem arises in that a driving-force-absent time during a speed change becomes prolonged.

The present teaching aims to provide a dog clutch-type speed change device that can realize effective disengagement of dogs and effective elimination of dog contact or partial engagement of the dogs during a speed change, thereby shortening a driving-absent period.

### Solution to Problem

The present teaching is a dog clutch-type speed change control device including: a clutch that is configured to, in a fully connected state, transmit a torque from a motive power source to a main shaft as a clutch friction member is pressed, in a partially connected state, transmit the torque as the clutch friction member is pressed with a pressing force lower than a pressing force in the fully connected state, and in a disconnected state, interrupt the torque transmission from the motive power source to the main shaft; a clutch actuator that is configured to control the clutch; a transmission that is configured to switch gears that are configured to transmit the torque between the main shaft and a drive shaft by a dog engaging action of engaging a driving dog and a driven dog and a dog disengaging action of disengaging the driving dog and the driven dog; a motive power source-torque adjustment device that is configured to adjust the torque of the motive power source; and a control device that is configured to control the clutch actuator and the motive power source-torque adjustment device, wherein: the clutch actuator is configured to perform action patterns including at least making the state of the clutch transition from the fully connected state to the partially connected state or the disconnected state; and, in a case where a high-speed, high-torque driving force state where, before the control device receives a speed change command and starts controlling the clutch actuator and the motive power source-torque adjustment device, the motive power source is driving the drive shaft and a speed or an output torque of the motive power source is high, and a low-speed, low-torque driving force state where, before the control device receives a speed change command and starts controlling the clutch actuator and the motive power source-torque adjustment device, the motive power source is driving the drive shaft and the speed or the output torque of the motive power source is low relative to that in the high-speed, high-torque driving force state are defined, the control device is configured to control both the clutch actuator and the motive power source-torque adjustment device upon receiving an upshift command such that an action pattern of the clutch in the high-speed, high-torque driving force state differs from an action pattern of the clutch in the low-speed, low-torque driving force state, and such that an adjustment pattern of the torque of the motive power source in the high-speed, high-torque driving force state differs from an adjustment pattern of the torque of the motive power source in the low-speed, low-torque driving force state, during a period from start of a dog disengaging action of the driving dog and the driven dog of a current stage of speed until completion of a dog engaging action of the driving dog and the driven dog of a next stage of speed.

In the above-described configuration, in a case where a temporal ratio of the disconnected state of the clutch to forms of connection of the clutch including the fully connected state and the partially connected state during the period from the start of the dog disengaging action of the driving dog and the driven dog of the current stage of speed until the completion of the dog engaging action of the driving dog and the driven dog of the next stage of speed is defined as a clutch disconnection ratio, the control device may be configured to control both the clutch actuator and the motive power source-torque adjustment device upon receiving an upshift command such that the clutch disconnection ratio in the high-speed, high-torque driving force state becomes lower than the clutch disconnection ratio in the low-speed, low-torque driving force state during the period from the start of the dog disengaging action of the driving dog and the driven dog of the current stage of speed until the completion of the dog engaging action of the driving dog and the driven dog of the next stage of speed.

In the above-described configuration, a state where the motive power source is driving the drive shaft before the control device receives a speed change command and starts controlling the clutch actuator and the motive power source-torque adjustment device is defined as a driving state, and further a state where the motive power source is being driven by the drive shaft before the control device receives a speed change command and starts controlling the clutch actuator and the motive power source-torque adjustment device is defined as a driven state; and the control device may be configured to control both the clutch actuator and the motive power source-torque adjustment device upon receiving an upshift command such that an action pattern of the clutch in the driving state differs from the clutch pattern in the driven state, and such that an adjustment pattern of the torque of the motive power source in the driving state differs from an adjustment pattern of the torque of the motive power source in the driven state, during the period from the start of the dog disengaging action of the driving dog and the driven dog of the current stage of speed until the completion of the dog engaging action of the driving dog and the driven dog of the next stage of speed.

In the above-described configuration, in a case where a temporal ratio of the disconnected state of the clutch to forms of connection of the clutch including the fully connected state and the partially connected state during the period from the start of the dog disengaging action of the driving dog and the driven dog of the current stage of speed until the completion of the dog engaging action of the driving dog and the driven dog of the next stage of speed is defined as a clutch disconnection ratio, and a maximum range of fluctuation of the torque of the motive power source during the period from the start of the dog disengaging action of the driving dog and the driven dog of the current stage of speed until the completion of the dog engaging action of the driving dog and the driven dog of the next stage of speed is defined as a torque maximum fluctuation range, the control device may be configured to control both the clutch actuator and the motive power source-torque adjustment device upon receiving an upshift command such that the clutch disconnection ratio in the driving state becomes lower than the clutch disconnection ratio in the driven state, and such that the torque maximum fluctuation range in the driving state becomes wider than the torque maximum fluctuation range in the driven state, during the period from the start of the dog disengaging action of the driving dog and the driven dog of the current stage of speed until the completion of the dog engaging action of the driving dog and the driven dog of the next stage of speed.

In the above-described configuration, the control device may be configured to control both the clutch actuator and the motive power source-torque adjustment device upon receiving an upshift command such that an action pattern of the clutch in the driving state differs from an action pattern of the clutch in the driven state, and such that an adjustment pattern of the torque of the motive power source in the driving state differs from an adjustment pattern of the torque of the motive power source in the driven state, during a period of the dog engaging action of the driving dog and the driven dog of the next stage of speed.

In the above-described configuration, the control device may be configured to control both the clutch actuator and the motive power source-torque adjustment device upon receiving an upshift command such that a clutch-transmitted torque that is transmitted through the clutch in the driving state becomes a torque-transmitted torque that is positive and higher than the clutch-transmitted torque in the driven state, and such that the torque of the motive power source in the driving state becomes a torque that is positive and higher than the torque of the motive power source in the driven state, during the period of the dog engaging action of the driving dog and the driven dog of the next stage of speed.

In the above-described configuration, the control device may be configured to control both the clutch actuator and the motive power source-torque adjustment device upon receiving a downshift command such that an action pattern of the clutch in the driving state differs from an action pattern of the clutch in the driven state, and such that an adjustment pattern of the torque of the motive power source in the driving state differs from an adjustment pattern of the torque of the motive power source in the driven state, during the period from the start of the dog disengaging action of the driving dog and the driven dog of the current stage of speed until the completion of the dog engaging action of the driving dog and the driven dog of the next stage of speed.

In the above-described configuration, in a case where a temporal ratio of the disconnected state of the clutch to forms of connection of the clutch including the fully connected state and the partially connected state during the period from the start of the dog disengaging action of the driving dog and the driven dog of the current stage of speed until the completion of the dog engaging action of the driving dog and the driven dog of the next stage of speed is defined as a clutch disconnection ratio, and a maximum range of fluctuation of the torque of the motive power source during the period from the start of the dog disengaging action of the driving dog and the driven dog of the current stage of speed until the completion of the dog engaging action of the driving dog and the driven dog of the next stage of speed is defined as a torque maximum fluctuation range, the control device may be configured to control both the clutch actuator and the motive power source-torque adjustment device upon receiving a downshift command such that the clutch disconnection ratio in the driving state becomes lower than the clutch disconnection ratio in the driven state, and such that the torque maximum fluctuation range in the driving state becomes wider than the torque maximum fluctuation range in the driven state, during the period from the start of the dog disengaging action of the driving dog and the driven dog of the current stage of speed until the completion of the dog engaging action of the driving dog and the driven dog of the next stage of speed.

In the above-described configuration, the control device may be configured to control both the clutch actuator and the motive power source-torque adjustment device upon receiving a downshift command such that an action pattern of the clutch in the driving state differs from an action pattern of the clutch in the driven state, and such that an adjustment pattern of the torque of the motive power source in the driving state differs from an adjustment pattern of the torque of the motive power source in the driven state, during a period of the dog engaging action of the driving dog and the driven dog of the next stage of speed.

### Advantageous Effects of Teaching

According to the present teaching, the forms of control of both the control of the clutch and the torque control of the motive power source are changed from dog disengagement until dog engagement according to the driving state of the motive power source, so as to be able to maintain a difference in rotation speed between the dogs that is appropriate for reducing an adhesive force between the dogs to disengage the dogs and for hindering dog contact or partial engagement of the dogs when the dogs engage. Thus, the occurrence of a state where the dogs cannot be disengaged, partial engagement of the dogs, and dog contact can be hindered to thereby shorten the driving-absent period.

### BRIEF DESCRIPTION OF THE DRAWINGS

[FIG. 1] FIG. 1 is a view illustrating an overview of a speed change action of a dog clutch-type speed change device according to an embodiment.
[FIG. 2] FIG. 2 is a side view of a motorcycle.
[FIG. 3] FIG. 3 is a sectional view showing the internal structure of a power unit.
[FIG. 4] FIG. 4 is a perspective view showing speed change gears constituting parts of a transmission.
[FIG. 5] FIG. 5 is a control block diagram of a speed change control device.
[FIG. 6] FIG. 6 is an explanatory view illustrating actions of disengaging a driving dog and a driven dog from each other and engaging the driving dog and the driven dog with each other.
[FIG. 7] FIG. 7 is an explanatory view illustrating a state when partial engagement between the driving dog and the driven dog has occurred.
[FIG. 8] FIG. 8 is a view showing transitions of a clutch command value, an actual clutch position, a required engine torque, a shift cam angle, an engine speed, a main shaft rotation speed, and a drive shaft rotation speed in the case where a motive power source is in a high-speed, high-torque driving force state when a speed change command for an upshift is generated.
[FIG. 9] FIG. 9 is a view showing the clutch command value, the actual clutch position, the required engine torque, the shift cam angle, the engine speed, the main shaft rotation speed, and the drive shaft rotation speed in the case where the motive power source is in a low-speed, low-torque driving force state when a speed change command for an upshift is generated.
[FIG. 10] FIG. 10 is a view showing the clutch command value, the actual clutch position, the required engine torque, the shift cam angle, the engine speed, the main shaft rotation speed, and the drive shaft rotation speed in the case where the motive power source is in a driven state when a speed change command for an upshift is generated.
[FIG. 11] FIG. 11 is a view showing transitions of the clutch command value, the actual clutch position, the required engine torque, the shift cam angle, the engine speed, the main shaft rotation speed, and the drive shaft rotation speed in the case where the motive power source is in the high-speed, high-torque driving force state when a speed change command for a downshift is generated.
[FIG. 12] FIG. 12 is a view showing the clutch command value, the actual clutch position, the required engine torque, the shift cam angle, the engine speed, the main shaft rotation speed, and the drive shaft rotation speed in the case where the motive power source is in the low-speed, low-torque driving force state when a speed change command for a downshift is generated.
[FIG. 13] FIG. 13 is a view showing the clutch command value, the actual clutch position, the required engine torque, the shift cam angle, the engine speed, the main shaft rotation speed, and the drive shaft rotation speed in the case where the motive power source is in the driven state when a speed change command for a downshift is generated.

### MODES FOR CARRYING OUT THE TEACHING

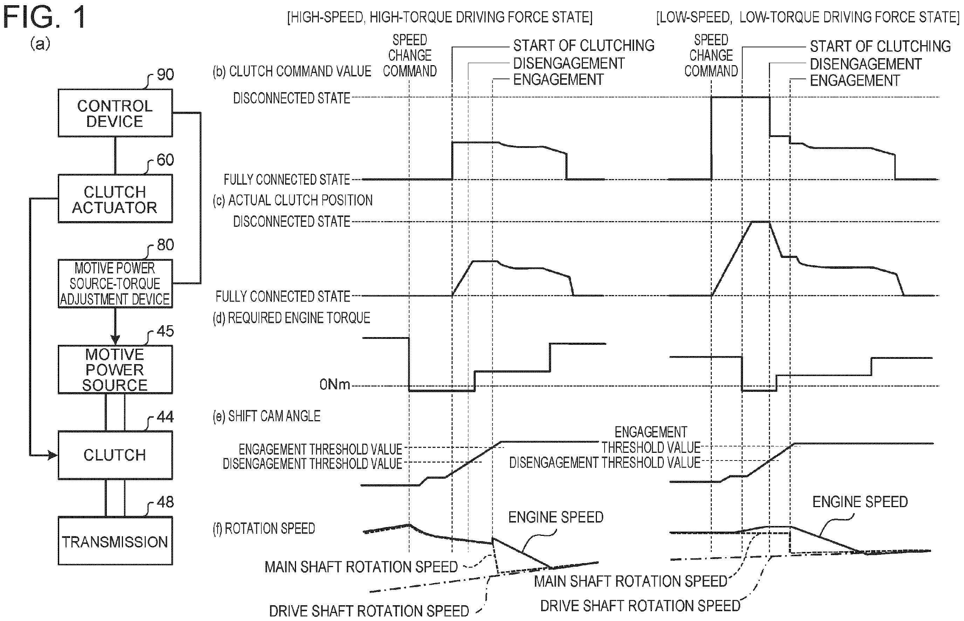

An embodiment of the present teaching will be described below with reference to the drawings. FIG. 1 is a view illustrating an overview of a speed change action of a dog clutch-type speed change device according to the embodiment. As shown in FIG. 1 (a), the dog clutch-type speed change device has a clutch 44, a motive power source 45, a transmission 48, a clutch actuator 60, a motive power source-torque adjustment device 80, and a control device 90.

A vehicle including the dog clutch-type speed change device travels on motive power of the motive power source 45. For example, the motive power source 45 is an internal combustion engine that uses gasoline as fuel. However, the type of the motive power source 45 is not particularly limited, and it may be a motor or the like other than an internal combustion engine such as a gasoline engine, or a gasoline engine and a motor may be combined to constitute a motive power source.

The dog clutch-type speed change device switches gears with different speed reduction ratios by the transmission 48. The transmission 48 switches gears that transmit a torque between a main shaft that rotates by receiving a torque from the motive power source 45 through the clutch 44 and a drive shaft that applies a driving torque to the vehicle. The gears include low-speed gears and high-speed gears, and in the vehicle, an upshift of changing the speed from a low-speed gear to a high-speed gear, and a downshift of changing the speed from a high-speed gear to a low-speed gear are performed. The clutch 44 transmits and interrupts the torque between the motive power source 45 and the main shaft. Connection states of the clutch 44 include a fully connected state, a partially connected state, and a disconnected state. When the clutch 44 is in the fully connected state, the torque is transmitted from the motive power source 45 to the main shaft as clutch friction members are pressed. When the clutch 44 is in the partially connected state, the torque is transmitted from the motive power source 45 to the main shaft as the clutch friction members are pressed with a pressing force that is lower than a pressing force when the clutch 44 is in the fully connected state. When the clutch 44 is in the disconnected state, the torque transmission from the motive power source 45 to the main shaft is interrupted.

During a speed change, the clutch actuator 60 switches the state of the clutch 44 to the fully connected state, the partially connected state, or the disconnected state. The motive power source-torque adjustment device 80 adjusts the torque of the motive power source 45 during a speed change. During a speed change, the control device 90 performs control of the connection state of the clutch 44 through the clutch actuator 60 as well as performs control of the torque of the motive power source 45 through the motive power source-torque adjustment device 80.

Next, actions when the dog clutch-type speed change device performs a speed change will be described. First described is a speed change action in the case where the motive power source 45 is in a high-speed, high-torque driving force state before the control device 90 receives a speed change command for an upshift of changing the speed from a low-speed gear to a high-speed gear and starts controlling the clutch actuator 60 and the motive power source-torque adjustment device 80. The high-speed, high-torque driving force state is a state where the motive power source 45 is driving the drive shaft and where a speed or an output torque of the motive power source 45 is high. When a speed change command for an upshift is generated, the control device 90 maintains the clutch 44 in the fully connected state (FIG. 1 (b)), while performing control that starts reducing the torque of the motive power source 45 (see FIG. 1 (d)).

Thereafter, when a predetermined time elapses, a command value for the clutch 44 switches from the fully connected state to the partially connected state (start of clutching). Then, a driving dog is moved and thereby the disengagement operation of the driving dog and a driven dog of the low-speed gear is started, and the driving dog enters an engaged state with a driven dog of the high-speed gear. In this case, while the driving dog disengaged from the driven dog of the low-speed gear is moving toward the driven dog of the high-speed gear, the control device 90 controls the clutch actuator 60 with the command value for the clutch 44 maintained as the partially connected state, and controls the motive power source-torque adjustment device 80 so as to increase the torque of the motive power source 45. Then, after the driving dog and the driven dog are engaged, the control device 90 further increases the torque of the motive power source 45 and switches the clutch command value to the fully connected state, and ends the upshifting action.

Next described is a speed change action in the case where the motive power source 45 is in a low-speed, low-torque driving force state before the control device 90 receives a speed change command for an upshift of changing the speed from a low-speed gear to a high-speed gear and starts controlling the clutch actuator 60 and the motive power source-torque adjustment device 80. The low-speed, low-torque driving force state is a state where the motive power source 45 is driving the drive shaft and where the speed or the output torque of the motive power source 45 is low. When a speed change command for an upshift is generated, the control device 90 puts the clutch 44 in the disconnected state (FIG. 1 (b)). Then, while an actual clutch position is changing from the fully connected state to the disconnected state (see FIG. 1 (c)), the control device 90 performs the control that starts reducing the torque of the motive power source 45 (see FIG. 1 (d)).

Thereafter, the driving dog is moved and thereby the disengagement of the driving dog and the driven dog of the low-speed gear is started, and the driving dog enters the engaged state with the driven dog of the high-speed gear. In this case, when the driving dog and the driven dog of the low-speed gear are disengaged, the control device 90 switches the clutch command value from the disconnected state to the partially connected state. While the driving dog disengaged from the driven dog of the low-speed gear is moving toward the driven dog of the high-speed gear, the control device 90 controls the motive power source-torque adjustment device 80 so as to increase the torque of the motive power source 45. Then, after the driving dog and the driven dog are engaged, the control device 90 further increases the torque of the motive power source 45 and switches the clutch command value to the fully connected state, and ends the upshifting action.

In this way, the control device 90 changes both the form of control of the clutch 44 and the form of control of the torque of the motive power source 45 according to which of the high-speed, high-torque driving force state and the low-speed, low-torque driving force state the motive power source 45 is in when a speed change command for an upshift is generated. Specifically, the control device 90 controls both the clutch actuator 60 and the motive power source-torque adjustment device 80 upon receiving an upshift command such that an action pattern of the clutch 44 in the high-speed, high-torque driving force state differs from an action pattern of the clutch 44 in the low-speed, low-torque driving force state, and such that an adjustment pattern of the torque of the motive power source 45 in the high-speed, high-torque driving force state differs from an adjustment pattern of the torque of the motive power source 45 in the low-speed, low-torque driving force state, during a period from start of a dog disengaging action of the driving dog and the driven dog of the low-speed gear of a current stage of speed until completion of an engaging action of the driving dog and the driven dog of the high-speed gear of a next stage of speed. Thus, a difference in rotation speed between the dogs that is appropriate for reducing an adhesive force between the dogs to disengage the dogs and for hindering dog contact or partial engagement of the dogs when the dogs engage can be secured, so that the occurrence of a state where the dogs cannot be disengaged, partial engagement of the dogs, and dog contact can be hindered to thereby shorten a driving-absent period. In this embodiment, the start of the dog disengaging action may refer to, for example, a timing when one of the driven dog and the driving dog starts separating from the engaged state, and the completion of the dog disengaging action refers to, for example, a timing when engaging protrusions of the dog have come out of engaging recesses of the dog (a timing when overlap with each other has disappeared). The start of the dog engaging action may refer to, for example, a timing when the engaging protrusions of the dog enter the engaging recesses of the dog (a timing when overlap with each other starts), and the completion of the dog engaging action may refer to a timing when the dogs hit and engage with each other in a rotation direction.

In the above-described embodiment, in a case where a temporal ratio of the disconnected state of the clutch 44 to the connection states including the fully connected state and the partially connected state during the period from the start of the disengaging action of the driving dog and the driven dog of the low-speed gear of the current stage of speed until the completion of the engaging action of the driving dog and the driven dog of the high-speed gear of the next stage of speed is defined as a clutch disconnection ratio, the control device 90 may control both the clutch actuator 60 and the motive power source-torque adjustment device 80 upon receiving an upshift command such that the clutch disconnection ratio when the driving state of the motive power source is the high-speed, high-torque driving force state becomes lower than the clutch disconnection ratio when the driving state of the motive power source is the low-speed, low-torque driving force state during the period from the start of the dog disengaging action of the driving dog and the driven dog of the current stage of speed until the completion of the dog engaging action of the driving dog and the driven dog of the next stage of speed. Here, the clutch disconnection ratio may be interpreted as a ratio of a period in which the clutch 44 is in the disconnected state during the period from the start of the disengaging action of the driving dog and the driven dog of the low-speed gear of the current stage of speed until the completion of the engaging action of the driving dog and the driven dog of the high-speed gear of the next stage of speed, relative to a period in which the clutch 44 is in the connected states including the fully connected state and the partially connected state during the period from the start of the disengaging action of the driving dog and the driven dog of the low-speed gear of the current stage of speed until the completion of the engaging action of the driving dog and the driven dog of the high-speed gear of the next stage of speed.

Here, when the motive power source 45 is in the low-speed, low-torque driving force state, reducing the torque of the motive power source 45 alone can hardly secure a difference in the number of relative rotations between the driving dog and the driven dog. Therefore, according to this embodiment, the clutch 44 is put in the disconnected state to promote dog disengagement of disengaging the driving dog and the driven dog. Then, after the dog disengagement, the clutch is put in the partially connected state to restore the driving force early after engagement of the driving dog and the driven dog. On the other hand, the responsiveness of the driving force is higher when the torque of the motive power source 45 is controlled than when the connection state of the clutch 44 is controlled. Therefore, when the motive power source 45 is in the high-speed, high-torque driving force state, the torque of the motive power source 45 is reduced to promote dog disengagement of disengaging the driving dog and the driven dog. Then, after the dog disengagement, the clutch is put in the fully connected state or the partially connected state to increase the driving force early after engagement of the driving dog and the driven dog. Specifically, in this embodiment, the control device 90 controls the clutch actuator 60 such that the clutch disconnection ratio when the engine 45 is in the high-speed, high-torque driving force state becomes lower than the clutch disconnection ratio when the engine 45 is in the low-speed, low-torque driving force state during the period from the start of the dog disengaging action of the driving dog and the driven dog of the current stage of speed until the completion of the dog engaging action of the driving dog and the driven dog of the next stage of speed. Thus, regardless of which of the high-speed, high-torque driving force state and a low-speed, low-torque driving state the driving state of the motive power source is, effective disengagement of the dogs and effective elimination of dog contact or partial engagement of the dogs during a speed change can be realized to thereby shorten the driving-absent period.

Next, a vehicle equipped with the dog clutch-type speed change device will be specifically described. Vehicles include, other than so-called four-wheel automobiles, snowmobiles, all-terrain vehicles (ATVs), and saddle-riding type automobiles such as motorcycles. While the type of vehicle is not particularly limited as long as the above-described speed change action is performed, in the following, the description will be continued by taking as an example a case where the vehicle is a motorcycle.

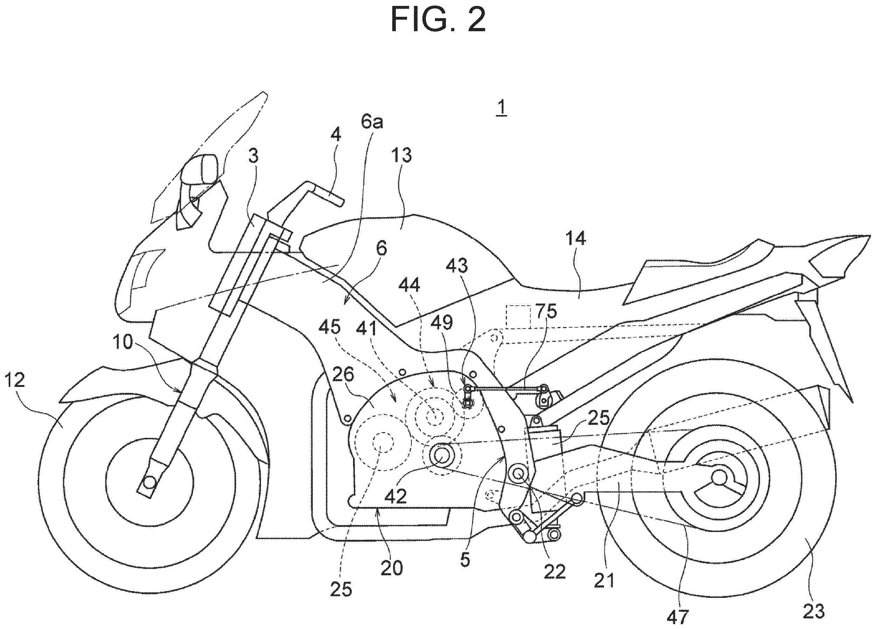

FIG. 2 is a side view showing a motorcycle 1. As shown in FIG. 2, the motorcycle 1 includes a head pipe 3 and a vehicle body frame 6. The vehicle body frame 6 has two frame parts 6a that are a left-right pair and extend rearward from the head pipe 3. In FIG. 1, only one of the frame parts 6a is shown. A rear portion of the frame part 6a extends downward and connects to a rear arm bracket 5. On the rear arm bracket 5, a front end portion of a rear arm 21 is supported through a pivot shaft 22 so as to be able to swing up and down. At a rear end portion of the rear arm 21, a rear wheel 23 is supported.

A front fork 10 is pivotably supported on the head pipe 3. At an upper end of the front fork 10, a steering handlebar 4 is provided, and at a lower end thereof, a front wheel 12 is rotatably provided. On upper portions of the frame parts 6a, a fuel tank 13 is disposed, and at a rear side of the fuel tank 13, a seat 14 is disposed.

A power unit 20 is suspended on the frame parts 6a and the rear arm bracket 5. The power unit 20 has at least the motive power source 45 (hereinafter referred to as an "engine 45"), the clutch 44, and the shift mechanism 43. The engine 45, the clutch 44, and the shift mechanism 43 are integrally incorporated in a crank case 26.

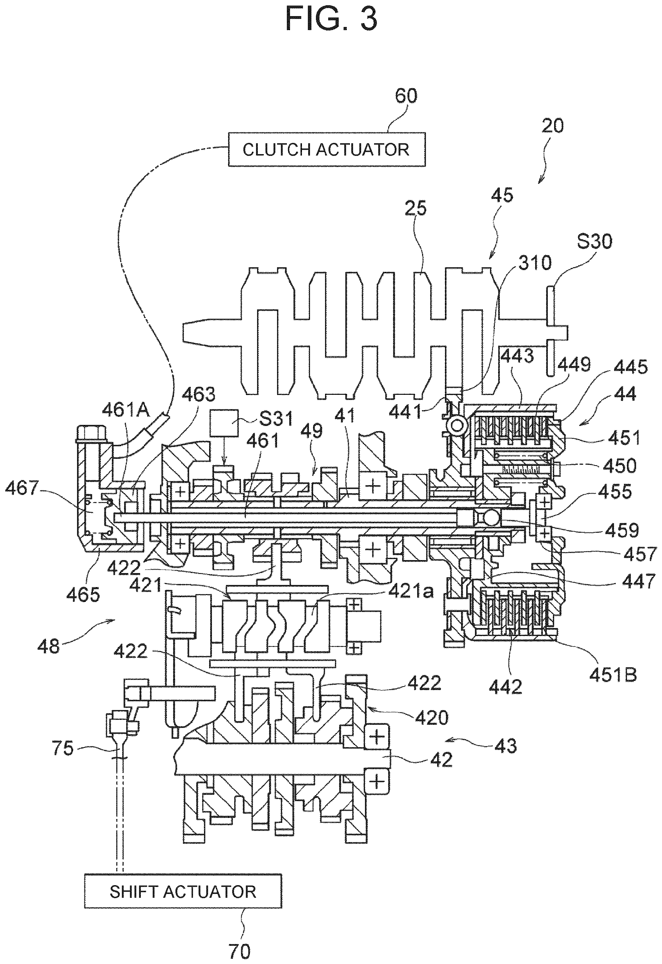

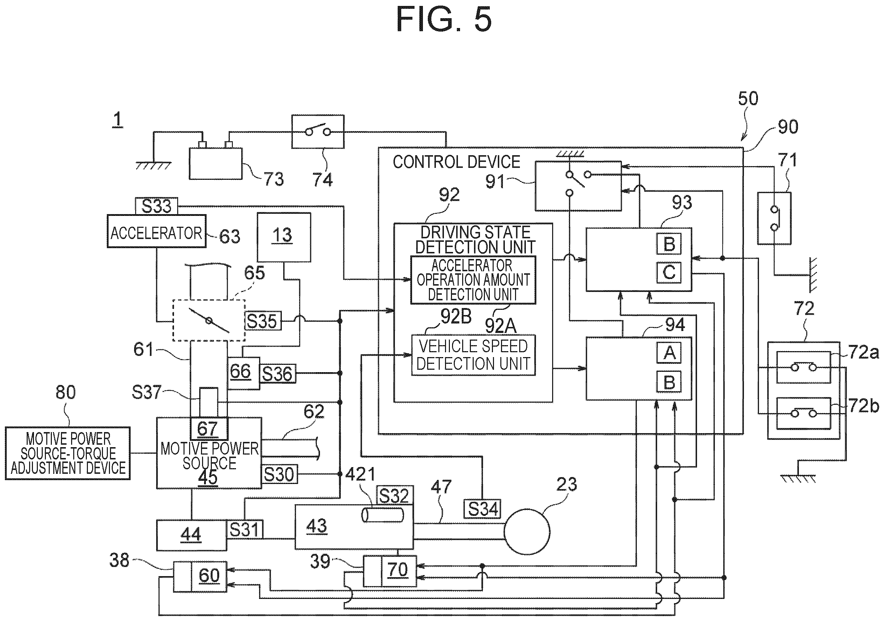

Next, the internal structure of the power unit 20 will be described. FIG. 3 is a sectional view showing the internal structure of the power unit 20. As shown in FIG. 3, the power unit 20 has the engine 45, the clutch 44, and the shift mechanism 43. A main shaft 41 is arranged parallel to a crankshaft 25. A drive shaft 42 is arranged parallel to the main shaft 41. The dog clutch-type speed change device 50 according to this embodiment includes the clutch 44, the shift mechanism 43, the clutch actuator 60, and a shift actuator 70 (see FIG. 5). As the clutch actuator 60 drives, the clutch 44 can be connected and disconnected. As the shift actuator 70 drives, switching of speed change gears of the shift mechanism 43, i.e., a change of a gear position of the shift mechanism 43 can be performed. The dog clutch-type speed change device 50 according to this embodiment includes the motive power source-torque adjustment device 80 that adjusts the torque of the engine 45 during a speed change (see FIG. 5). Further, the dog clutch-type speed change device 50 includes the control device 90 that executes control of the driving of the clutch actuator 60 and the shift actuator 70 as well as control of the motive power source-torque adjustment device 80.

The dog clutch-type speed change device 50 need not to include separate actuators as the clutch actuator 60 and the shift actuator 70. That is, the dog clutch-type speed change device 50 may include an actuator that performs connection and disconnection of the clutch 44 as well as switching of the speed change gears of the shift mechanism 43. In this case, this actuator has the function of connecting and disconnecting the clutch 44 and the function of switching the speed change gears of the shift mechanism 43.

In the fully connected state, the clutch 44 according to this embodiment transmits the torque without slippage from the engine 45 to the main shaft 41 as the clutch friction members are pressed; in the partially connected state, it transmits the torque as the clutch friction members are pressed with a pressing force that is lower than a pressing force in the fully connected state; and in the disconnected state, it interrupts the torque transmission from the engine 45 to the main shaft 41. The clutch friction members include at least one of a driving-side clutch friction member (e.g., a friction disc or the like) that rotates integrally with a primary gear on a driven side of the clutch 44, and a driven-side clutch friction member (e.g., a clutch disc) or the like that integrally rotates with the main shaft 41. In the fully connected state of the clutch 44, the driving-side clutch friction member and the driven-side clutch friction member are pressed against each other by a clutch spring (not shown) and rotate integrally by a friction force occurring therebetween. The torque of the engine 45 is transmitted from the driving-side clutch friction member to the main shaft 41 through the driven-side clutch friction member. In the disconnected state of the clutch 44, the driving-side clutch friction member and the driven-side clutch friction member are separated from each other against an elastic force of the clutch spring, and pressing between the driving-side clutch friction member and the driven-side clutch friction member is eliminated. Then, the driven-side clutch friction member rotates idly relative to the driving-side clutch friction member, so that the torque transmission is interrupted. In the partially connected state of the clutch 44, the driving-side clutch friction member presses the driven-side clutch friction member with a pressing force lower than the pressing force in the fully connected state to transmit the torque. When making the clutch 44 shift toward the disconnection side, the clutch actuator 60 separates the driving-side friction member and the driven-side friction member from each other against the elastic force of the clutch spring so as to reduce the pressing force that has been acting therebetween. Generally, in a friction clutch, a driving-side friction member and a driven-side friction member are pressed with a pressing force according to a clutch position, and a torque according to this pressing force is transmitted through the friction clutch. Thus, the clutch position and the torque transmitted through the friction clutch are correlated with each other.

The clutch 44 is, for example, a multi-disc friction clutch, and includes a clutch housing 443 and a clutch boss 447. On an inner side of the clutch housing 443, a plurality of friction plates 445 each functioning as the driving-side clutch friction member is provided, and on an outer side of the clutch boss 447, a plurality of clutch plates 449 each functioning as the driven-side clutch friction member is provided. Each friction plate 445 is fixed on the clutch housing 443 with respect to a rotation direction of the main shaft 41. Therefore, the plurality of friction plates 445 rotates along with the clutch housing 443. Each friction plate 445 can change its position with respect to an axial direction of the main shaft 41.

The plurality of friction plates 445 is arrayed in the axial direction of the main shaft 41. Each clutch plate 449 faces each of adjacent friction plates 445. Each clutch plate 449 is fixed on the clutch boss 447 with respect to the rotation direction of the main shaft 41. Thus, the plurality of clutch plates 449 rotates along with the clutch boss 447. Each clutch plate 449 can change its position with respect to the axial direction of the main shaft 41.

In this embodiment, the plurality of friction plates 445 and the plurality of clutch plates 449 constitute a plate group 442.

As shown in FIG. 3, a pressure plate 451 is disposed outward of the main shaft 41 (on the right side in FIG. 3). The pressure plate 451 is formed in a substantially disc-like shape. At a radially outer-side part of the pressure plate 451, a pressing part 451B protruding toward the plate group 422 is formed. The pressing part 451B faces the friction plate 445 that is located farthest on the right side in the plate group 442.

The clutch 44 is provided with a spring 450. The spring 450 urges the pressure plate 451 inward (toward the left side in FIG. 3). That is, the spring 450 urges the pressure plate 451 in the direction in which the pressing part 451B presses the plate group 442.

A center part of the pressure plate 451 is engaged with one end portion of a push rod 455 (on the right side in FIG. 3) through a bearing 457. Thus, the pressure plate 451 is rotatable relative to the push rod 455. The main shaft 41 has a cylindrical shape. The other end portion (left end portion) of the push rod 455 is housed inside the main shaft 41. Inside the main shaft 41, a spherical ball 459 adjacent to the other end portion (left end portion) of the push rod 455 is provided. Further, inside the main shaft 41, a push rod 461 adjacent to the ball 459 is provided.

One end portion (left end portion) 461A of the push rod 461 protrudes from the main shaft 41. At the one end portion 461A of the push rod 461, a piston 463 is integrally provided. The piston 463 is guided by a cylinder main body 465 and is slidable in the axial direction of the main shaft 41.

When the clutch actuator 60 drives, a hydraulic fluid as a compressed fluid is supplied to a space 467 surrounded by the piston 463 and the cylinder main body 465. When the hydraulic fluid is supplied to the space 467, the piston 463 is pushed and moves in the rightward direction in FIG. 3. Thus, the piston 463 pushes the pressure plate 451 in the rightward direction in FIG. 3 through the push rod 461, the ball 459, the push rod 455, and the bearing 457. When the pressure plate 451 is pushed in the rightward direction in FIG. 3, the pressing part 451B of the pressure plate 451 separates from the friction plate 445, so that the clutch 44 assumes the disconnected state.

When connecting the clutch 44, the pressure plate 451 moves toward the left side in FIG. 3 by the spring 450. When the pressure plate 451 moves toward the left side in FIG. 3, the pressing part 451B presses the plate group 442 in the leftward direction. As a result, the friction plates 445 and the clutch plates 449 of the plate group 442 are brought into pressure-contact with each other. Thus, the clutch 44 assumes the fully connected state.

On the other hand, in the disconnected state of the clutch 44, the pressure plate 451 moves toward the right side in FIG. 3 by the push rod 455. Then, the pressing part 451B of the pressure plate 451 separates from the plate group 442. In the state where the pressing part 451B is separated from the plate group 442, each friction plate 445 and each clutch plate 449 are not in pressure-contact with each other, and there is a small gap formed between each friction plate 445 and each clutch plate 449. Therefore, a friction force that can transmit the driving force does not occur between each friction plate 445 and each clutch plate 449.

In this way, the pressure plate 451 moves in one direction or the other direction along the axial direction of the main shaft 41 according to which of the driving force of the clutch actuator 60 and the urging force of the spring 450 is larger. In accordance with this movement, the state of the clutch 44 transitions between the fully connected state and the disconnected state. Hereinafter, unless otherwise defined, the fully connected state represents a state where the torque is transmitted without slippage from the engine 45 to the main shaft 41 as the clutch friction members are pressed; the partially connected state represents a state where the torque is transmitted as the clutch friction members are pressed with a pressing force lower than the pressing force in the fully connected state; and the disconnected state represents a state where the torque transmission from the engine 45 to the main shaft 41 is interrupted.

A gear 310 is integrally supported on the crankshaft 25 of the engine 45. On the main shaft 41, that meshes with the gear 310 is supported. The gear 441 is rotatable relative to the main shaft 41. The gear 441 is integrally provided on, for example, the clutch housing 443. Thus, the torque of the engine 45 is transmitted from the crankshaft 25 to the clutch housing 443 through the gear 441. Further, the torque of the engine 45 is transmitted from the clutch housing 443 to the clutch boss 447 by the friction force occurring between the plurality of friction plates 445 and the plurality of clutch plates 449. The clutch boss 447 and the main shaft 41 rotate integrally. That is, there is no relative rotation between the clutch boss 447 and the main shaft 41. Therefore, when the clutch 44 is connected, the torque of the engine 45 is transmitted to the main shaft 41.

The push rod 455 is not limited to the one that pushes the pressure plate 451 toward the right side in FIG. 3 by a mechanism inserted inside the main shaft 41. The push rod 455 may be one that pulls the pressure plate 451 toward the right side in FIG. 3 by a mechanism provided outside the pressure plate 451 (on the right side in FIG. 3).

The clutch 44 may be a single-disc clutch instead of a multi-disc clutch. The clutch 44 may include a centrifugal weight. In this case, the clutch 44 is connected and disconnected based on the driving of the clutch actuator 60 and a centrifugal force of the centrifugal weight. The clutch may be a hydraulic type. The connection and disconnection of the clutch are controlled through a hydraulic pressure, and specifically, the clutch pressing force can be controlled through a hydraulic pressure generated by a clutch actuator using a hydraulic solenoid. Thus, the friction force occurring between the plurality of friction plates 445 and the plurality of clutch plates 449 constituting parts of the clutch can be controlled through a hydraulic pressure.

Subsequently, the detailed configuration of the shift mechanism 43 will be described. The shift mechanism 43 according to this embodiment is a so-called dog-type shift mechanism.

In the power unit 20, an engine speed sensor S30 is provided on the crankshaft 25. The engine speed sensor S30 detects a rotation speed of the crankshaft 25. The crankshaft 25 is coupled to the main shaft 41 through the clutch 44. A main shaft rotation speed sensor S31 is provided on the main shaft 41. The main shaft rotation speed sensor S31 detects a rotation speed of the main shaft 41.

On the main shaft 41, multi-stage speed change gears 49 are mounted. On the other hand, on the drive shaft 42, a plurality of speed change gears 420 corresponding to the multi-stage speed change gears 49 is mounted. Of the multi-stage speed change gears 49 and the plurality of speed change gears 420, only one selected pair of gears mesh with each other. At least either the speed change gears 49 other than the selected speed change gear 49 among the multi-stage speed change gears 49 or the speed change gears 420 other than the selected speed change gear 420 among the plurality of speed change gears 420 are rotatable relative to the main shaft 41 or the drive shaft 42. That is, at least either the speed change gears 49 that are not selected or the speed change gears 420 that are not selected rotate idly relative to the main shaft 41 or the drive shaft 42. Consequently, transmission of rotation between the main shaft 41 and the drive shaft 42 is performed through only the selected speed change gear 49 and the selected speed change gear 420 that mesh with each other.

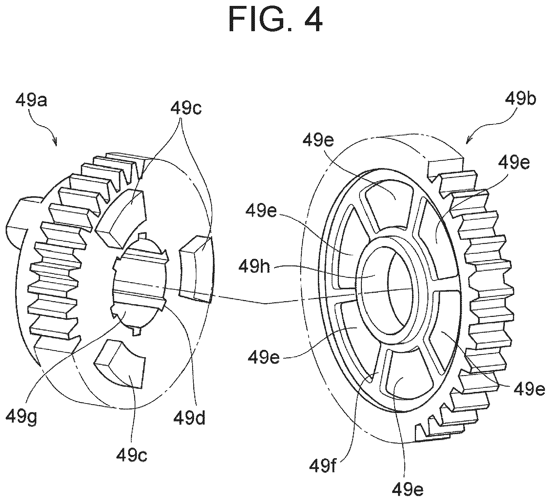

The specific configuration of the speed change gears 49 will be described using FIG. 4. While FIG. 4 shows the configuration of the speed change gears 49, the configuration of the speed change gears 420 is similar and therefore description thereof will be omitted.

As the speed change gears 49, a first gear 49a in which engaging protrusions 49c are formed as a driving dog on an axial end surface, and a second gear 49b in which engaging recesses 49e are formed as a driven dog in an axial end surface facing the engaging protrusions 49c are included. The shift mechanism 43 includes pluralities of first gears 49a and second gears 49b, with each first gear 49a disposed between one pair of second gears 49b. In the first gear 49a, three engaging protrusions 49c are formed, and these engaging protrusions 49c are disposed evenly in a circumferential direction at an outer edge portion of the axial end surface of the first gear 49a. In the second gear 49b, six engaging recesses 49e are formed, and these engaging recesses 49e are also evenly disposed in a circumferential direction.

At an axial center part of the first gear 49a, an insertion hole 49g through which the main shaft 41 and the drive shaft 42 are inserted is formed, and a plurality of grooves 49d is formed in a circumferential surface of the insertion hole 49g. The first gear 49a is spline-fitted on the main shaft 41 and the drive shaft 42. On the other hand, an insertion hole 49h through which the main shaft 41 and the drive shaft 42 are inserted is formed in the second gear 49b, but no groove is formed in this insertion hole 49h. Thus, the second gear 49b is mounted on the main shaft 41 and the drive shaft 42 in an idly rotatable state.

As a shift cam 421 (see FIG. 3) rotates, a shift fork 422 moves along a cam groove 421a, and in conjunction with this, the first gear 49a moves in the axial direction along splines of the main shaft 41 and the drive shaft 42. As the engaging protrusions 49c of the first gear 49a engage in the engaging recesses 49e of the second gear 49b, the combination of the speed change gears 49, 420 that transmit the driving force from the main shaft 41 to the drive shaft 42 is switched, and thus a gear change is performed. The transmission 48 is formed by these speed change gears 49, 420 and the shift cam 421.

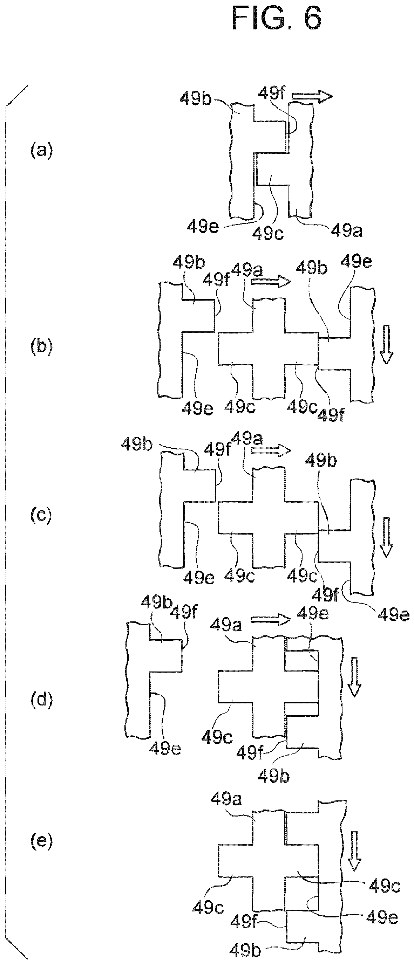

Next, dog disengagement and dog engagement during switching of the gears in the speed change gears 49 will be described. FIG. 6 is an explanatory view illustrating actions of disengaging the driving dog and the driven dog from each other and engaging the driving dog and the driven dog with each other.

As shown in FIG. 6 (a), when the first gear 49a and the second gear 49b are engaged with each other, the engaging protrusions 49c of the first gear 49a are in contact with inner surfaces of the engaging recesses 49e of the second gear 49b in a state where the engaging protrusions 49c have entered deep inside the engaging recesses 49e of the second gear 49b. In this case, the driving force is transmitted from the main shaft 41 to the drive shaft 42. When performing a gear change from this state, the shift cam 421 (see FIG. 3) rotates and causes the first gear 49a to move in the rightward direction in FIG. 6 (a), so that the engaging protrusions 49c of the first gear 49a come out of the engaging recesses 49e of the second gear 49b as shown in FIG. 6 (b). This is called dog release. When the first gear 49a moves further in the rightward direction in FIG. 6 (a), the engaging protrusions 49c of the first gear 49a come into contact with an axial end surface 49f of another second gear 49b disposed adjacently. This is called dog contact.

Since the second gear 49b is rotating relative to the first gear 49a as shown in FIG. 6 (b), when the engaging protrusions 49c of the first gear 49a are no longer in contact with the axial end surface 49f of the second gear 49b as shown in FIG. 6 (c), the engaging protrusions 49c of the first gear 49a enter the engaging recesses 49e of the second gear 49b as shown in FIG. 6 (d). This is called dog engagement. When the second gear 49b rotates further relative to the first gear 49a, the engaging protrusions 49c of the first gear 49a come into contact with the inner surfaces of the engaging recesses 49e of the second gear 49b as shown in FIG. 6 (e). Thus, the first gear 49a engages with another second gear 49b, so that the driving force is transmitted from the main shaft 41 to the drive shaft 42.

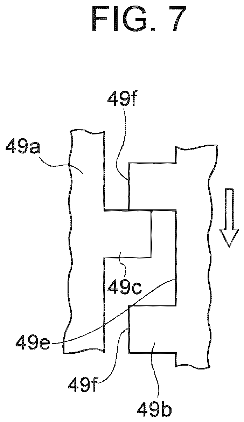

When the first gear 49a moves in the axial direction as the shift cam 421 (see FIG. 3) rotates, the engaging protrusions 49c of the first gear 49a may come into contact with the inner surfaces of the engaging recesses 49e of the second gear 49b in a state of not having completely entered the engaging recesses 49e of the second gear 49b as shown in FIG. 7. This state is called half-meshing of dogs. In this case, the engaging protrusions 49c of the first gear 49a cannot be made to enter deep inside the engaging recesses 49e of the second gear 49b unless the torque of the engine 45 is reduced and an adhesive force (load) between the engaging protrusions 49c of the first gear 49a and the engaging recesses 49e of the second gear 49b is removed.

Selection of the speed change gear 49 or the speed change gear 420 is performed by the shift cam 421. A plurality of cam grooves 421a is formed in an outer circumferential surface of the shift cam 421. One shift fork 422 is mounted in each cam groove 421a. Each shift fork 422 is engaged with predetermined speed change gear 49 and speed change gear 420 of the main shaft 41 and the drive shaft 42, respectively. As the shift cam 421 rotates, each of the plurality of shift forks 422 is guided by the cam groove 421a so as to move in the axial direction of the main shaft 41. Thus, gears that mesh with each other among the speed change gears 49 and the speed change gears 420 are selected. Specifically, among the pluralities of speed change gears 49 and speed change gears 420, only one pair of gears at a position corresponding to a rotation angle of the shift cam 421 enters a state of being fixed on the main shaft 41 and the drive shaft 42, respectively, by the splines. Thus, the gear position in the shift mechanism 43 is determined. As a result, transmission of rotation is performed at a predetermined gear ratio between the main shaft 41 and the drive shaft 42 through the speed change gear 49 and the speed change gear 420.

The shift cam 421 rotates by a predetermined angle as a shift rod 75 moves reciprocatingly. The shift rod 75 moves reciprocatingly as the shift actuator 70 drives.

Owing to the configuration as has been described above, when the engine 45 is driven with the predetermined pair of speed change gear 49 and speed change gear 420 fixed on the main shaft 41 and the drive shaft 42, respectively, and the clutch 44 put in the fully connected state, the torque of the engine 45 is transmitted to the main shaft 41 through the clutch 44. Transmission of rotation is performed at a predetermined gear ratio between the main shaft 41 and the drive shaft 42 through the predetermined pair of speed change gear 49 and speed change gear 420, and the drive shaft 42 rotates. When the drive shaft 42 rotates, the torque is transmitted by a power transmission mechanism 47 (see FIG. 2) that connects the drive shaft 42 and the rear wheel 23 (see FIG. 2) to each other, and the rear wheel 23 rotates.

Next, the dog clutch-type speed change device 50 according to this embodiment will be described. FIG. 5 is a control block diagram of the dog clutch-type speed change device 50. As shown in FIG. 5, the dog clutch-type speed change device 50 includes the shift mechanism 43, the clutch 44, the clutch actuator 60, the shift actuator 70, and the control device (electric control unit) 90. The control device 90 has a switching determination unit 91, a driving state detection unit 92, a semi-automatic control unit 93, and a fully automatic control unit 94.

The motorcycle 1 includes a power source device 73 and a main switch 74. When the main switch 74 is operated by an occupant of the motorcycle 1, the power source device 73 and the control device 90 become electrically continuous with each other and the control device 90 becomes operable. In this regard, the motorcycle 1 may include a relay switch or the like (not shown). In this case, part of the control device 90 can operate also when the main switch 74 is not operated.

As described above, in the power unit 20 (see FIG. 2), the engine speed sensor S30 is provided on the crankshaft 25 (see FIG. 3). In FIG. 5, the engine speed sensor S30 is adjacent to the engine 45. On the main shaft 41 (see FIG. 3), the main shaft rotation speed sensor S31 is provided. In FIG. 5, the main shaft rotation speed sensor S31 is adjacent to the clutch 44.

The motorcycle 1 includes an intake pipe 61, an exhaust pipe 62, an accelerator 63, a throttle valve 65, a fuel supply device 66, and an ignition device 67. The intake pipe 61 connects to the engine 45. The exhaust pipe 62 connects to the engine 45 at a position different from a position at which the intake pipe 61 connects thereto. The throttle valve 65 is provided inside the intake pipe 61. The throttle valve 65 adjusts an amount and a speed of air flowing through the intake pipe 61. The fuel supply device 66 is provided at an intermediate point in the intake pipe 61. The fuel supply device 66 may be a so-called carburetor or may be a fuel injection device. The fuel supply device 66 supplies fuel stored in the fuel tank 13 to the inside of the intake pipe 61. Further, the ignition device 67 is provided inside the engine 45. In this embodiment, an ignition timing of the ignition device 67 is electronically controlled. However, the ignition timing of the ignition device 67 may be mechanically controlled.

An opening degree of the throttle valve 65 changes based on an amount of pressing on the accelerator 63. As the opening degree of the throttle valve 65 changes, the amount of air passing through the intake pipe 61 changes. However, the opening degree of the throttle valve 65 may be electronically controlled.

The motorcycle 1 includes an accelerator operation amount sensor S33, a throttle position sensor S35, a fuel supply amount sensor S36, an ignition timing sensor S37, a shift position sensor S32, and a vehicle speed sensor S34. The accelerator operation amount sensor S33 detects the amount of pressing on the accelerator 63 as an operation amount. The throttle position sensor S35 detects the opening degree of the throttle valve 65. The fuel supply amount sensor S36 detects a fuel supply amount in the fuel supply device 66. The ignition timing sensor S37 detects a timing of igniting an air-fuel mixture in the ignition device 67. The shift position sensor S32 detects the gear position of the shift mechanism 43 by detecting the rotation angle of the shift cam 421 (see FIG. 3). The vehicle speed sensor S34 detects a vehicle speed of the motorcycle 1. These sensors may detect the respective amounts of shift directly or indirectly, and may have an arithmetic operation function and calculate required physical amounts from predetermined physical amounts.

Further, the dog clutch-type speed change device 50 includes a potentiometer 38 that detects a driving amount of the clutch actuator 60, and a potentiometer 39 that detects a driving amount of the shift actuator 70. Particularly, the potentiometer 38 detects a rotation angle of the clutch actuator 60. The potentiometer 39 detects a rotation angle of the shift actuator 70. However, in the case where the dog clutch-type speed change device 50 includes an actuator that has both the function as the clutch actuator 60 and the function as the shift actuator 70 as described above, the dog clutch-type speed change device 50 need not to include the two potentiometers of the potentiometer 38 and the potentiometer 39.

The driving state detection unit 92 of the control device 90 detects a driving state of the motorcycle 1 by detection values of the above-described sensors. That is, the driving state detection unit 92 receives an input of a signal based on the operation amount of the accelerator 63 from the accelerator operation amount sensor S33. The driving state detection unit 92 thereby detects the operation amount of the accelerator 63.

The driving state detection unit 92 receives an input of a signal based on the opening degree of the throttle valve 65 from the throttle position sensor S35. The driving state detection unit 92 thereby detects the opening degree of the throttle valve 65. The driving state detection unit 92 receives an input of a signal based on the fuel supply amount of the fuel supply device 66 from the fuel supply amount sensor S36. The driving state detection unit 92 thereby detects the fuel supply amount in the fuel supply device 66. The driving state detection unit 92 receives an input of a signal based on the ignition timing of the ignition device 67 from the ignition timing sensor S37. The driving state detection unit 92 thereby detects the ignition timing of the ignition device 67. The driving state detection unit 92 receives an input of a signal based on the rotation speed of the crankshaft 25 from the engine speed sensor S30. The driving state detection unit 92 thereby detects the rotation speed of the crankshaft 25. The driving state detection unit 92 receives an input of a signal based on the rotation speed of the main shaft 41 from the main shaft rotation speed sensor S31. The driving state detection unit 92 thereby detects the rotation speed of the main shaft 41. The driving state detection unit 92 receives an input of a signal based on the rotation angle of the shift cam 421 from the shift position sensor S32. The driving state detection unit 92 thereby detects the current gear position in the shift mechanism 43. The driving state detection unit 92 receives an input of a signal based on the vehicle speed of the motorcycle 1 from the vehicle speed sensor S34. The driving state detection unit 92 thereby detects the vehicle speed of the motorcycle 1.

In the dog clutch-type speed change device 50, the speed change action is performed as the clutch actuator 60 and the shift actuator 70, or only the shift actuator 70 drives. The speed change action of the dog clutch-type speed change device 50 is a series of actions consisting of disconnecting the clutch 44, changing the gear position of the shift mechanism 43, and connecting the clutch 44.

In the dog clutch-type speed change device 50, control can be executed in which a rider of the motorcycle 1 orders the above-described speed change action to start and the series of speed change actions is automatically performed. This control is control in which the driving of the clutch actuator 60 and the shift actuator 70 is started according to operation of a shift switch 72 (see FIG. 5 etc.) by the rider of the motorcycle 1. This control will be referred to as semi-automatic control Sc. In the dog clutch-type speed change device 50, control can be executed in which the series of speed change actions is automatically performed according to the driving state of the motorcycle 1, regardless of the intention of the rider of the motorcycle 1. This control is control in which the driving of the clutch actuator 60 and the shift actuator 70 is started according to detection of the driving state by the driving state detection device. This control will be referred to as fully automatic control Fc.

The dog clutch-type speed change device 50 according to this embodiment is configured to be able to switch between the semi-automatic control Sc and the fully automatic control Fc. Specifically, the control device 90 has the semi-automatic control unit 93 and the fully automatic control unit 94. The semi-automatic control unit 93 executes the semi-automatic control Sc. The fully automatic control unit 94 executes the fully automatic control Fc.

In the dog clutch-type speed change device 50 according to this embodiment, in a case where the engine 45 is driving the drive shaft 42 before the control device 90 receives a speed change command and starts controlling the clutch actuator 60 and the motive power source-torque adjustment device 80 is defined as a driving state, and further a state where the engine 45 is being driven by the drive shaft 42 before the control device 90 receives a speed change command and starts controlling the clutch actuator 60 and the motive power source-torque adjustment device 80 is defined as a driven state, the control device 90 may control both the clutch actuator 60 and the motive power source-torque adjustment device 80 upon receiving an upshift command such that an action pattern of the clutch 44 in the driving state differs from a clutch pattern in the driven state, and such that an adjustment pattern of the torque of the engine 45 in the driving state differs from an adjustment pattern of the torque of the engine 45 in the driven state, during the period from the start of the dog disengaging action of the driving dog and the driven dog of the current stage of speed change until the completion of the dog engaging action of the driving dog and the driven dog of the next stage of speed.

Specifically, the forms of control of the control of the clutch 44 and the torque control of the engine 45 during a speed change are changed according to which of the driving state and the driven state the engine 45 is in when a speed change command for an upshift is generated. Here, that the engine 45 is in the driving state means a state where the torque is transmitted from the crankshaft 25 to the rear wheel 23 through the transmission 48 as a right grip of a steering handlebar 4 is rotated and the accelerator 63 is operated. That the engine 45 is in the driven state means a state where the torque is transmitted from the rear wheel 23 to the crankshaft 25 through the transmission 48 as the right grip of the steering handlebar 4 is returned. Determination as to which of the driving state and the driven state the engine 45 is in can be performed, for example, from the magnitude of the engine torque. Here, when the engine 45 is in the driving state, a meshing state of the dogs in the speed change gear 49 and the speed change gear 420 is meshing on acceleration-side surfaces. On the other hand, when the engine 45 is in the driven state, the meshing state of the dogs in the speed change gear 49 and the speed change gear 420 is a meshing on deceleration-side surfaces. It is also possible to determine which of the driving state and the driven state the engine 45 is in by determining which state of the state of meshing on the acceleration-side surfaces and the state of meshing on the deceleration-side surfaces the meshing state of the dogs is.

In the case where the engine 45 is in the driving state when a speed change command for an upshift is generated, the dog clutch-type speed change device 50 changes to control that, during dog disengagement, creates a state where the torque of the engine 45 has been reduced to 0 Nm or near 0 Nm, and during dog engagement, creates a state where the torque of the engine 45 has been increased compared with that during the dog disengagement and puts the clutch 44 in the partially connected state or the fully connected state. In this embodiment, driving states of the engine 45 when a speed change command is generated include the high-speed, high-torque driving force state where the engine 45 is driving the drive shaft and where the speed or the output torque of the engine 45 is high, and the low-speed, low-torque driving force state where the engine 45 is driving the drive shaft and where the speed or the output torque of the engine 45 is low. The dog clutch-type speed change device 50 determines which state the driving state of the engine 45 is, and changes the forms of control of the control of the clutch 44 and the torque control of the engine 45 during a speed change according to the determined driving state of the engine 45.

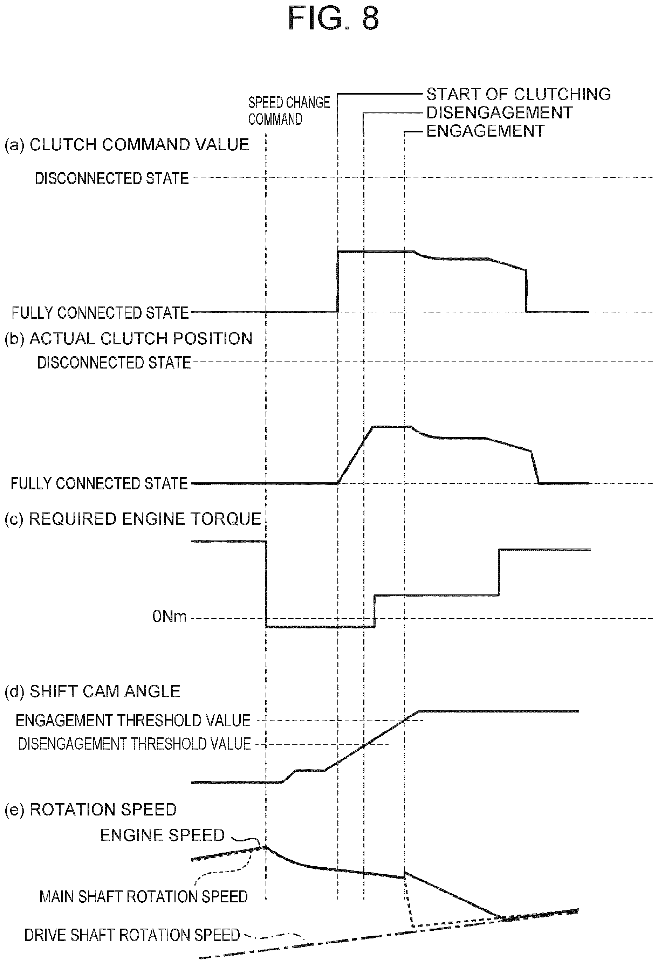

Next, control by the dog clutch-type speed change device 50 in the case where the engine 45 is in the high-speed, high-torque driving force state when a speed change command for an upshift is generated will be described. FIG. 8 is a view showing transitions of the clutch command value, the actual clutch position, a required engine torque, a shift cam angle, the engine speed, the main shaft rotation speed, and a drive shaft rotation speed in the case where the motive power source is in the high-speed, high-torque driving force state when a speed change command for an upshift is generated.

As shown in FIG. 8, in the case where the engine 45 is in the high-speed, high-torque driving force state, the dog clutch-type speed change device 50 maintains the clutch 44 in the fully connected state during a speed change, and starts reducing the torque of the engine 45 at the time of generation of a speed change command. Even when a speed change command is generated as an upshift switch 72a is pressed, if the engine 45 is in the high-speed, high-torque driving force state, the command value for the clutch does not immediately switch from the fully connected state to the disconnected state. When a speed change command is generated, the control device 90 starts reducing the required engine torque (the torque of the engine 45). Thereafter, when a predetermined time elapses, the command value for the clutch switches from the fully connected state to the partially connected state. Thus, the pressure plate 451 is pushed in the rightward direction in FIG. 3 with respect to the axial direction of the main shaft 41, so that the actual clutch position moves gradually from the fully connected state to the partially connected state. In the shift mechanism 43, switching of the speed change gears is performed. Specifically, dog disengagement of the first gear 49a from the second gear 49b and dog engagement thereof with another second gear 49b are performed. Then, when the dog disengagement of the first gear 49a from the second gear 49b is performed, the command value for the clutch switches to the partially connected state. During a period from the dog disengagement to the dog engagement, the control device 90 increases the required engine torque so as to be a positive torque. Then, after a predetermined time has elapsed since the completion of the dog engagement, the control device 90 further increases the required engine torque. Thereafter, when the command value for the clutch switches from the partially connected state to the fully connected state, the pressure plate 451 is further pushed in the leftward direction in FIG. 3 with respect to the axial direction of the main shaft 41, so that the actual clutch position moves gradually from the partially connected state to the fully connected state, and finally the clutch 44 assumes the fully connected state.

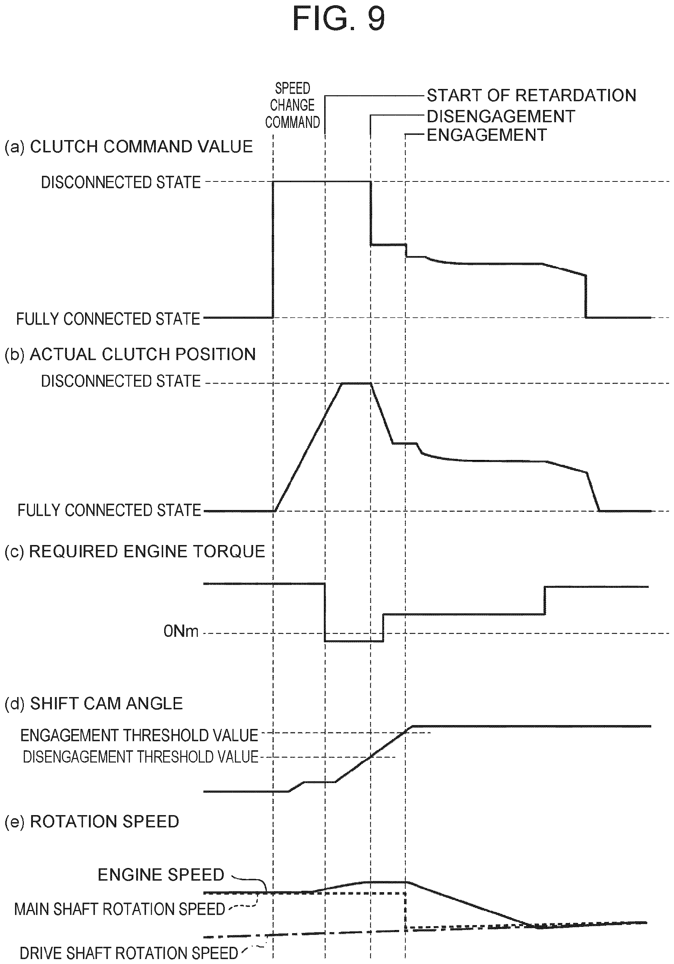

Next, control by the dog clutch-type speed change device 50 in the case where the engine 45 is in the low-speed, low-torque driving force state when a speed change command for an upshift is generated will be described. FIG. 9 is a view showing the clutch command value, the actual clutch position, the required engine torque, the shift cam angle, the engine speed, the main shaft rotation speed, and the drive shaft rotation speed in the case where the motive power source is in the low-speed, low-torque driving force state when a speed change command for an upshift is generated. As shown in FIG. 9, when a speed change command for an upshift is generated, the command value for the clutch 44 switches from the fully connected state to the disconnected state. Thus, the pressure plate 451 is pushed in the rightward direction in FIG. 3 with respect to the axial direction of the main shaft 41, so that the actual clutch position moves gradually from the fully connected state to the disconnected state and reaches the disconnected state before dog disengagement of the first gear 49a from the second gear 49b. When a predetermined time has elapsed since the speed change command has been generated, the control device 90 changes to control that starts reducing the required engine torque (the torque of the engine 45). Then, when the dog disengagement of the first gear 49a from the second gear 49b is performed, the command value for the clutch switches to the partially connected state. Thus, the pressure plate 451 is pushed in the leftward direction in FIG. 3 with respect to the axial direction of the main shaft 41, and the actual clutch position moves gradually from the disconnected state to the partially connected state. Thus, the partially connected state is reached after the dog disengagement and before the dog engagement. During a period from the dog disengagement until before the dog engagement, the control device 90 increases the required engine torque so as to be a positive torque. Then, the dog engagement of the first gear 49a with the second gear 49b is performed with the clutch 44 in the partially connected state and the engine torque in a positive state. Then, after a predetermined time has elapsed since the completion of the dog engagement, the control device 90 further increases the required engine torque. Thereafter, when the command value for the clutch switches from the partially connected state to the fully connected state, the pressure plate 451 is further pushed in the leftward direction in FIG. 3 with respect to the axial direction of the main shaft 41, so that the actual clutch position moves gradually from the partially connected state to the fully connected state, and finally the clutch 44 assumes the fully connected state. Here, when the engine 45 is in the low-speed, low-torque driving force state, reducing the torque of the engine 45 alone can hardly secure a difference in the number of relative rotations between the driving dog and the driven dog. Therefore, according to this embodiment, the clutch 44 is put in the disconnected state to promote dog disengagement of disengaging the driving dog and the driven dog of the current stage of speed, and at the same time to secure a difference in the number of relative rotations between the driving dog and the driven dog of the next stage of speed during engagement of these dogs. Then, after the dog disengagement, the clutch is put in the partially connected state to restore the driving force early after the engagement of the driving dog and the driven dog. In the case where the engine 45 is in the high-speed, high-torque driving force state, the responsiveness of the driving force is higher when the torque of the engine 45 is controlled than when the connection state of the clutch 44 is controlled. Therefore, the torque of the engine 45 is reduced to thereby promote the dog disengagement of disengaging the driving dog and the driven dog. Then, after the dog disengagement, the clutch is put in the fully connected state or the partially connected state to increase the driving force early after the engagement of the driving dog and the driven dog. Specifically, in this embodiment, the control device 90 controls the clutch actuator 60 such that the clutch disconnection ratio when the engine 45 is in the high-speed, high-torque driving force state (FIG. 8 (b)) becomes lower than the clutch disconnection ratio when the engine 45 is in the low-speed, low-torque driving force state (FIG. 9 (b)) during the period from the start of the dog disengaging action of the driving dog and the driven dog of the current stage of speed until the completion of the dog engaging action of the driving dog and the driven dog of the next stage of speed. In this embodiment, the control device 90 may control the clutch actuator 60 such that a clutch-transmitted torque when the engine 45 is in the high-speed, high-torque driving force state becomes higher than a clutch-transmitted torque when the engine 45 is in the low-speed, low-torque driving force state during the period from the start of the dog disengaging action of the driving dog and the driven dog of the current stage of speed until the completion of the dog engaging action of the driving dog and the driven dog of the next stage of speed, particularly during the dog engagement of the driving dog and the driven dog of the next stage of speed. According to this embodiment, regardless of which state of the high-speed, high-torque driving force state and the low-speed, low-torque driving state the driving state of the motive power source is, effective disengagement of the dogs and effective elimination of dog contact or partial engagement of the dogs during a speed change can be realized to thereby shorten the driving-absent period.

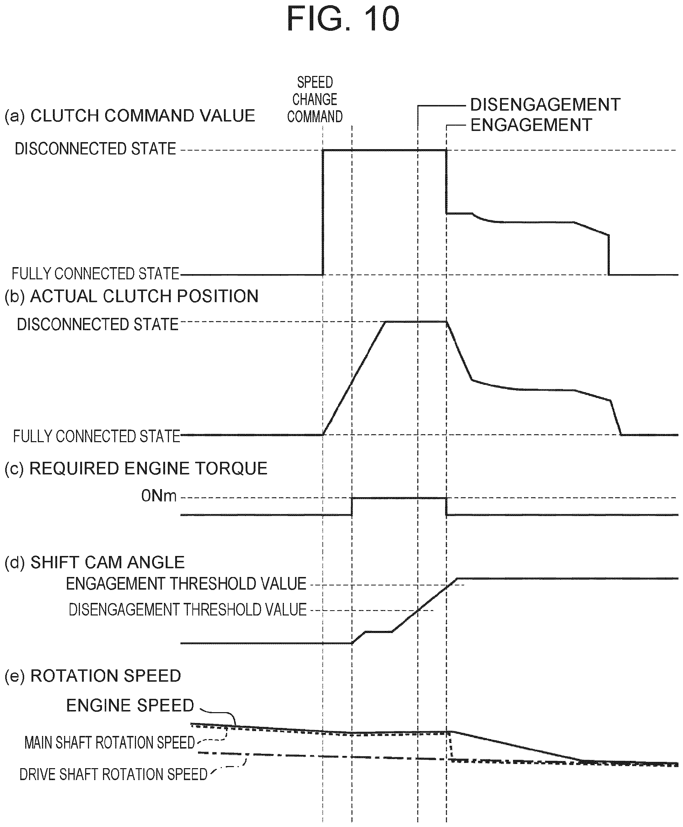

Next, control by the dog clutch-type speed change device 50 in the case where the engine 45 is not in the driving state but in the driven state when a speed change command for an upshift is generated will be described. FIG. 10 is a view showing the clutch command value, the actual clutch position, the required engine torque, the shift cam angle, the engine speed, the main shaft rotation speed, and the drive shaft rotation speed in the case where the motive power source is in the driven state when a speed change command for an upshift is generated.

As shown in FIG. 10, when a speed change command for an upshift is generated, the command value for the clutch switches from the fully connected state to the disconnected state. Thus, the pressure plate 451 is pushed in the rightward direction in FIG. 3 with respect to the axial direction of the main shaft 41, and the actual clutch position moves gradually from the fully connected state to the disconnected state, and reaches the disconnected state before dog disengagement of the first gear 49a from the second gear 49b. When a predetermined time has elapsed since the speed change command has been generated, the control device 90 controls the motive power source-torque adjustment device 80 so as to create a state where the required engine torque (the torque of the engine 45) has been increased to 0 Nm or near 0 Nm. In the shift mechanism 43, switching of the speed change gears is performed. Specifically, dog disengagement of the first gear 49a from the second gear 49b and dog engagement thereof with another second gear 49b are performed. Then, when the dog engagement of the first gear 49a with another second gear 49b is performed, the command value for the clutch switches to the partially connected state. Thus, the pressure plate 451 is pushed in the leftward direction in FIG. 3 with respect to the axial direction of the main shaft 41, and the actual clutch position moves gradually from the disconnected state to the partially connected state. Thereafter, when the command value for the clutch switches from the partially connected state to the fully connected state, the pressure plate 451 is further pushed in the leftward direction in FIG. 3 with respect to the axial direction of the main shaft 41, and the actual clutch position moves gradually from the partially connected state to the fully connected state, and finally the clutch 44 assumes the fully connected state. Here, when the engine 45 is in the driven state, since the torque of the engine 45 cannot be reduced, as shown in FIG. 10, the clutch is put in the disconnected state to promote dog disengagement of disengaging the driving dog and the driven dog. Then, even when partial engagement (half-meshing) of the driving dog and the driven dog occurs in the course of the engaging action of engaging the driving dog and the driven dog, the torque of the engine 45 cannot be reduced to eliminate that partial engagement. Therefore, the clutch is maintained in the disconnected state before the engaging action of the driving dog and the driven dog and during the engaging action. On the other hand, when the engine 45 is in the low-speed, low-torque driving force state, as shown in FIG. 9, the clutch 44 is put in the disconnected state to promote dog disengagement of disengaging the driving dog and the driven dog. Then, after the dog disengagement, the clutch is put in the partially connected state to restore the driving force early after the engagement of the driving dog and the driven dog. Specifically, in this embodiment, the control device 90 controls the motive power source-torque adjustment device 80 such that a torque maximum fluctuation range of the engine when the engine 45 is in the driving state, for example, the high-speed, high-torque driving force state and/or the low-speed, low-torque driving force state (FIG. 8 (c), FIG. 9 (c)) becomes wider than a torque maximum fluctuation range of the engine when the engine 45 is in the driven state (FIG. 10 (c)), during the period from the start of the dog disengaging action of the driving dog and the driven dog of the current stage of speed until the completion of the dog engaging action of the driving dog and the driven dog of the next stage of speed. Here, the torque maximum fluctuation range is a range of fluctuation between a maximum value and a minimum value of the engine torque. In this embodiment, the control device 90 controls the clutch actuator 60 such that the clutch disconnection ratio when the engine 45 is in the driving state, for example, the low-speed, low-torque driving force state and/or the high-speed, high-torque driving force state becomes lower than the clutch disconnection ratio when the engine 45 is in the driven state, during the period from the start of the dog disengaging action of the driving dog and the driven dog of the current stage of speed until the completion of the dog engaging action of the driving dog and the driven dog of the next stage of speed. In this embodiment, the control device 90 may control the clutch actuator 60 such that the clutch-transmitted torque when the engine 45 is in the driving state, for example, the high-speed, high-torque driving force state and/or the low-speed, low-torque driving force state becomes higher than the clutch-transmitted torque when the engine 45 is in the driven state, during the period from the start of the dog disengaging action of the driving dog and the driven dog of the current stage of speed until the completion of the dog engaging action of the driving dog and the driven dog of the next stage of speed, particularly during the dog engagement of the driving dog and the driven dog of the next stage of speed.

The dog clutch-type speed change device 50 of this embodiment configured as has been described above includes: the clutch 44 that, in the fully connected state, transmits the torque from the engine 45 (motive power source) to the main shaft 41 without slippage as the clutch friction members are pressed, in the partially connected state, transmits the torque as the clutch friction members are pressed with a pressing force lower than the pressing force in the fully connected state, and in the disconnected state, interrupts the torque transmission from the engine 45 to the main shaft 41; the clutch actuator 60 that controls the clutch 44; the transmission 48 that performs a speed change by moving the engaging protrusions 49c (driving dog) and the engaging recesses 49e (driven dog) toward and away from each other so as to engage and disengage the engaging protrusions 49c and the engaging recesses 49e and thus switching the gear (the second gear 49b relative to the first gear 49a) that transmits the driving force between the main shaft 41 and the drive shaft 42; the shift actuator 70 that performs a speed change of the transmission 48; the motive power source-torque adjustment device 80 that adjusts the torque of the engine 45 during a speed change; and the control device 90 that controls the clutch actuator 60, the shift actuator 70, and the motive power source-torque adjustment device 80. Both the clutch actuator 60 and the motive power source-torque adjustment device 80 are controlled according to which state of the driving state and the driven state the engine 45 is in when a speed change command is generated, such that the action pattern of the clutch 44 in the driving state differs from the clutch pattern in the driven state, and such that the adjustment pattern of the torque of the engine 45 in the driving state differs from the adjustment pattern of the torque of the engine 45 in the driven state, during the period from the start of the dog disengaging action of the driving dog and the driven dog of the current stage of speed until the completion of the dog engaging action of the driving dog and the driven dog of the next stage of speed. Thus, the forms of control of the control of the clutch 44 and the torque control of the engine 45 during a speed change are changed, so that, regardless of which state of the driving state and the driven state the engine 45 is in when a speed change command is generated, a difference in rotation speed between the dogs that is appropriate for reducing the adhesive force between the dogs to disengage the dogs and for hindering dog contact or partial engagement of the dogs when the dogs engage can be maintained. Therefore, the occurrence of a state where the dogs cannot be disengaged, partial engagement of the dogs, and dog contact can be hindered to thereby shorten the driving-absent period.

In the dog clutch-type speed change device 50 of this embodiment, as shown in FIG. 10, in the case where the engine 45 is in the driven state when a speed change command is generated, the control is performed that puts the clutch 44 in the disconnected state and creates the state where the torque of the engine 45 has been increased to 0 Nm or near 0 Nm during dog disengagement and dog engagement. Here, when the engine 45 is in the driven state, the adhesive force between the engaging protrusions 49c (driving dog) of the first gear 49a and the engaging recesses 49e (driven dog) of the second gear 49b cannot be reduced by reducing the torque of the engine 45. However, the dog disengagement can be reliably performed by putting the clutch 44 in the disconnected state during the dog disengagement. In addition, by putting the clutch 44 in the disconnected state during the dog engagement, a state of partial engagement of the dogs can be responded to.

In the dog clutch-type speed change device 50 of this embodiment, as shown in FIG. 8 and FIG. 9, in the case where the engine 45 is in the driving state (the high-speed, high-torque driving state and/or the low-speed, low-torque driving state) when a speed change command is generated, the control changes to the control that, during dog disengagement, creates the state where the torque of the engine 45 has been reduced to 0 Nm or near 0 Nm, and during the dog engagement, creates the state where the torque of the engine 45 has been increased compared with that during the dog disengagement and puts the clutch 44 in the partially connected state or the fully connected state. Thus, the dog disengagement is performed in the state where the torque of the engine 45 has been reduced to zero or near zero, so that the dog disengagement can be reliably performed. By creating the state where the torque of the engine 45 has been increased compared with that during dog disengagement and putting the clutch 44 in the partially connected state or the fully connected state during dog engagement, the driving-absent time can be shortened.

In the dog clutch-type speed change device 50 of this embodiment, the driving states of the engine 45 when a speed change command is generated include the high-speed, high-torque driving force state and the low-speed, low-torque driving force state in the case where the engine 45 is in the driving state when a speed change command is generated, determination as to which state the driving state of the engine 45 is in performed, and the forms of control of the control of the clutch 44 and the torque control of the engine 45 during a speed change are changed according to the determined driving state of the engine 45. Thus, regardless of which state of the high-speed, high-torque driving force state and the low-speed, low-torque driving force state the engine 45 is in, a speed change suitable to each state can be performed.

In the dog clutch-type speed change device 50 of this embodiment, in the high-speed, high-torque driving force state, the control changes to the control that maintains the clutch 44 in the fully connected state during a speed change and starts reducing the torque of the engine 45 at the time of generation of a speed change command. In this case, since the responsiveness of the transmission of the driving force is higher when the torque of the engine 45 is reduced than when the clutch 44 is controlled, dog disengagement by reducing the torque of the engine 45 is performed. The clutch 44 is put in the partially connected state or the fully connected state such that driving can be restored immediately after dog engagement. When a state of half-meshing of the dogs occurs, it is responded to by reducing the torque of the engine 45. These actions can shorten the driving-absent time.

In the dog clutch-type speed change device 50 of this embodiment, in the high-speed, high-torque driving force state, the control may change to control that puts the clutch 44 in the partially connected state before dog engagement during a speed change, makes the clutch 44 shift from the partially connected state to the fully connected state after the dog engagement, and starts reducing the torque of the engine 45 at the time of generation of a speed change command. Also in this case, since the partially connected state of the clutch 44 is maintained even when the control has changed to the control that starts reducing the torque of the engine 45 at the time of generation of a speed change command, the driving-absent time can be shortened.

In the dog clutch-type speed change device 50 of this embodiment, in the low-speed, low-torque driving force state, the control changes to the control that starts disconnection control of the clutch 44 at the time of generation of a speed change command, and starts reducing the torque of the engine 45 when a predetermined time has elapsed since the start of the disconnection control of the clutch 44 or based on a timing when the clutch 44 assumes the disconnected state. Here, when the reduction of the torque of the engine 45 alone is performed, the relative speed of the dogs is lost as the rotation speed of the main shaft 41 decreases, so that the time of dog contact as shown in FIG. 6 (b) becomes prolonged. Therefore, the clutch 44 is disconnected during dog disengagement to prevent a decrease in the rotation speed of the main shaft 41 and thereby secure the relative speed of the dogs, and the clutch 44 is put in the partially connected state immediately after the dog disengagement to expedite the restoration of driving. When a state of half-meshing of the dogs occurs, it is responded to by reducing the torque of the engine 45. These actions can shorten the driving-absent time.

In the dog clutch-type speed change device 50 of this embodiment, in the low-speed, low-torque driving force state, the disconnection control of the clutch 44 puts the clutch in the disconnected state during dog disengagement and puts it in the partially connected state after the dog disengagement and before dog engagement. In this case, a time for which the clutch is in the disconnected state can be shortened as much as possible, so that the driving-absent time can be shortened.

In the dog clutch-type speed change device 50 of this embodiment, the temporal ratio of the disconnected state of the clutch 44 to the forms of connection of the clutch 44 including the fully connected state and the partially connected state during the period from the start of the dog disengaging action of the driving dog and the driven dog of the current stage of speed until the completion of the dog engaging action of the driving dog and the driven dog of the next stage of speed is defined as the clutch disconnection ratio. The range of fluctuation between the maximum value and the minimum value of the torque of the engine 45 during the period from the start of the dog disengaging action of the driving dog and the driven dog of the current stage of speed until the completion of the dog engaging action of the driving dog and the driven dog of the next stage of speed is defined as the torque maximum fluctuation range. In the dog clutch-type speed change device 50 of this embodiment, the control device 90 changes both the form of control of the clutch 44 and the form of control of the torque of the engine 45 according to which state of the driving state and the driven state the engine 45 is in when a speed change command for an upshift is generated. Specifically, the control device 90 may control both the clutch actuator 60 and the motive power source-torque adjustment device 80 upon receiving an upshift command such that the clutch disconnection ratio in the driving state becomes lower than the clutch disconnection ratio in the driven state, and such that the torque maximum fluctuation range in the driving state becomes wider than the torque maximum fluctuation range in the driven state, during the period from the start of the dog disengaging action of the driving dog and the driven dog of the current stage of speed until the completion of the dog engaging action of the driving dog and the driven dog of the next stage of speed.

In the dog clutch-type speed change device 50 of this embodiment, the control device 90 may control both the clutch actuator 60 and the motive power source-torque adjustment device 80 upon receiving an upshift command such that the action pattern of the clutch 44 in the driving state differs from the action pattern of the clutch 44 in the driven state, and such that the adjustment pattern of the engine torque in the driving state differs from the adjustment pattern of the engine torque in the driven state, during the period of the dog engaging action of the driving dog and the driven dog of the current stage of speed.

In the dog clutch-type speed change device 50 of this embodiment, the control device 90 may control both the clutch actuator 60 and the motive power source-torque adjustment device 80 upon receiving an upshift command such that the clutch-transmitted torque that is transmitted through the clutch 44 in the driving state becomes a torque-transmitted torque that is positive and higher than the clutch-transmitted torque in the driven state, and such that the torque of the engine 45 in the driving state becomes a torque that is positive and higher than the torque of the engine 45 in the driven state, during the period of the dog engaging action of the driving dog and the driven dog of the current stage of speed.

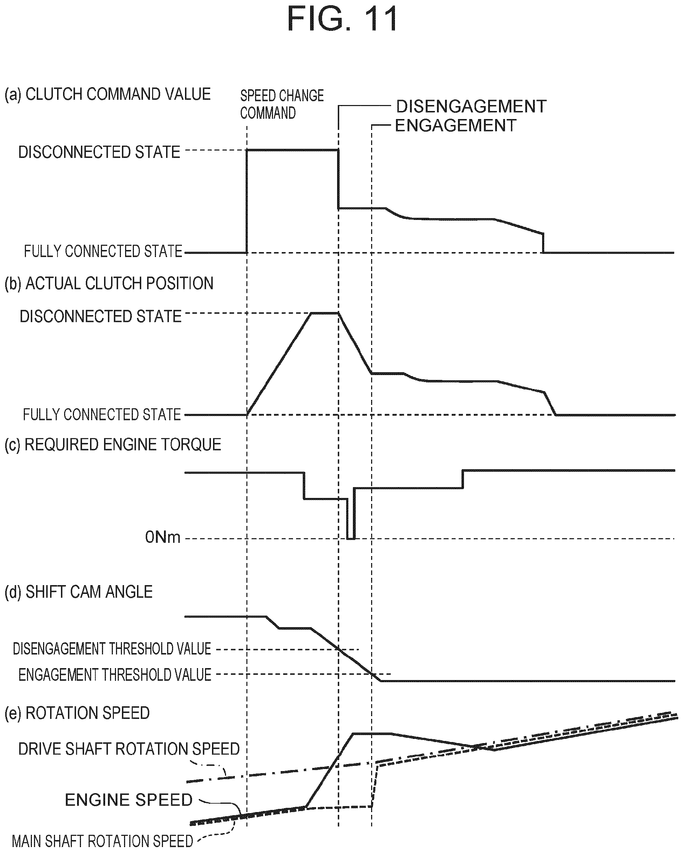

Next, a speed change action in the case where the engine 45 is in the high-speed, high-torque driving force state when a speed change command for a downshift is generated will be described. FIG. 11 is a view showing the clutch command value, the actual clutch position, the required engine torque, the shift cam angle, the drive shaft rotation speed, the engine speed, and the main shaft rotation speed in the case where the motive power source is in the high-speed, high-torque driving force state when a speed change command for a downshift is generated.

As shown in FIG. 11, in the dog clutch-type speed change device 50, when a speed change command for a downshift is generated, the control device 90 starts the disconnection control of the clutch 44 and controls the clutch actuator 60 so as to put the clutch 44 in the disconnected state. Further, the control device 90 controls the motive power source-torque adjustment device 80 so as to start reducing the torque of the engine 45. The control of the clutch 44 puts the clutch in the disconnected state during dog disengagement, and puts the clutch 44 in the partially connected state immediately after the dog disengagement such that a predetermined driving force can be obtained. "Immediately after the dog disengagement" includes a time when the dog disengagement is performed and a predetermined time afterward. In addition, the control device 90 reduces the engine torque at a timing when the actual clutch position of the clutch 44 becomes the disconnected state, reduces the engine torque to 0 Nm or a torque near 0 Nm through the motive power source-torque adjustment device 80 after the dog disengagement, and then increases the engine torque to a torque that is slightly lower than the engine torque before the speed change command has been generated. Then, dog engagement is performed with the clutch in the partially connected state and the torque of the engine in the positive state.

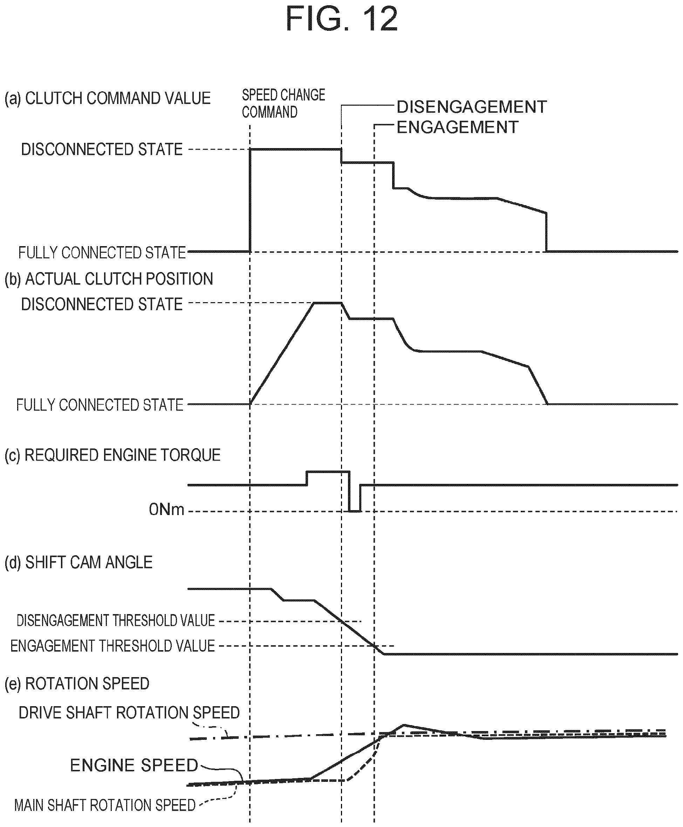

Next, a speed change action in the case where the engine 45 is in the low-speed, low-torque driving force state when a speed change command for a downshift is generated will be described. FIG. 12 is a view showing the clutch command value, the actual clutch position, the required engine torque, the shift cam angle, the drive shaft rotation speed, the engine speed, and the main shaft rotation speed in the case where the motive power source is in the low-speed, low-torque driving force state when a speed change command for a downshift is generated.

As shown in FIG. 12, in the dog clutch-type speed change device 50, when a speed change command for a downshift is generated, the control device 90 starts the disconnection control of the clutch 44 and controls the clutch actuator 60 so as to put the clutch 44 in the disconnected state. Further, the control device 90 controls the motive power source-torque adjustment device 80 so as to start increasing the torque of the engine 45. Next, after the driving dog and the driven dog of the current stage of speed are disengaged, the control device 90 controls the clutch so as to be partially connected and synchronizes the main shaft rotation speed and the engine speed with each other. Then, after the dog disengagement, the control device 90 reduces the engine torque to 0 Nm or a torque near 0 Nm through the motive power source-torque adjustment device 80, and thereafter increases the engine torque so as to be a torque that is almost equal to the engine torque before the speed change command has been generated. Then, dog engagement is performed with the clutch in the partially connected state and the engine torque in the positive state. Here, when the engine 45 is in the low-speed, low-torque driving force state, reducing the torque of the engine 45 alone can hardly secure a difference in the number of relative rotations between the driving dog and the driven dog. Therefore, according to this embodiment, the clutch 44 is put in the disconnected state to promote dog disengagement of disengaging the driving dog and the driven dog. Then, after the dog disengagement, the clutch is put in the partially connected state to restore the driving force early after engagement of the driving dog and the driven dog. On the other hand, when the engine 45 is in the high-speed, high-torque driving force state, the clutch 44 is put in the disconnected state to promote dog disengagement of disengaging the driving dog and the driven dog. Then, after the dog disengagement, the clutch is made to transition toward the fully connected state or the partially connected state to increase the driving force early after the engagement of the driving dog and the driven dog. Specifically, in this embodiment, during the period from the start of the dog disengaging action of the driving dog and the driven dog of the current stage of speed until the completion of the dog engaging action of the driving dog and the driven dog of the next stage of speed, when the engine 45 is in the high-speed, high-torque driving force state, a strong pressing force is applied to the clutch 44 to increase the driving force early after the engagement of the driving dog and the driven dog of the next stage of speed. On the other hand, when the engine 45 is in the low-speed, low-torque driving force state, a pressing force is applied to the clutch 44 such that such a weak torque is transmitted to the main shaft as to be able to eliminate partial engagement of the driving dog and the driven dog of the next stage of speed even when partial engagement of these dogs occurs in the middle of the engaging action of engaging these dogs. Specifically, the control device 90 controls the clutch actuator 60 such that a clutch pressing force when the engine 45 is in the high-speed, high-torque driving force state (FIG. 11 (a)) becomes higher than a clutch pressing force when the engine 45 is in the low-speed, low-torque driving force state (FIG. 12 (a)). Thus, regardless of which state of the high-speed, high-torque driving force state and the low-speed, low-torque driving state the driving state of the motive power source is, effective disengagement of the dogs and effective elimination of dog contact or partial engagement of the dogs during a speed change can be realized to thereby shorten the driving-absent period. Further, in this embodiment, the control device 90 controls the motive power source-torque adjustment device 80 such that the torque maximum fluctuation range of the engine when the engine 45 is in the high-speed, high-torque driving force state (FIG. 11 (c)) becomes wider than the torque maximum fluctuation range of the engine when the engine 45 is in the low-speed, low-torque driving force state (FIG. 12 (c)) during the period from the start of the dog disengaging action of the driving dog and the driven dog of the current stage of speed until the completion of the dog engaging action of the driving dog and the driven dog of the next stage of speed. During the dog engagement of the driving dog and the driven dog of the next stage of speed, the torque of the engine when the engine 45 is in the high-speed, high-torque driving force state (FIG. 11 (c)) is higher than the torque of the engine when the engine 45 is in the low-speed, low-torque driving force state (FIG. 12 (c)). In this embodiment, the control device 90 controls the clutch actuator 60 such that the clutch-transmitted torque when the engine 45 is in the high-speed, high-torque driving force state becomes higher than the clutch-transmitted torque when the engine 45 is in the low-speed, low-torque driving force state, during the period from the start of the dog disengaging action of the driving dog and the driven dog of the current stage of speed until the completion of the dog engaging action of the driving dog and the driven dog of the next stage of speed, particularly during the dog engagement of the driving dog and the driven dog of the next stage of speed. According to this embodiment, the forms of control of both the control of the clutch and the torque control of the engine are changed from the dog disengagement until the dog engagement according to the high-speed, high-torque driving force state and the low-speed, low-torque driving state as the driving states of the motive power source. Thus, regardless of which state of the high-speed, high-torque driving force state and the low-speed, low-torque driving state the driving state of the motive power source is, effective disengagement of the dogs and effective elimination of dog contact or partial engagement of the dogs during a speed change can be realized to thereby shorten the driving-absent period.

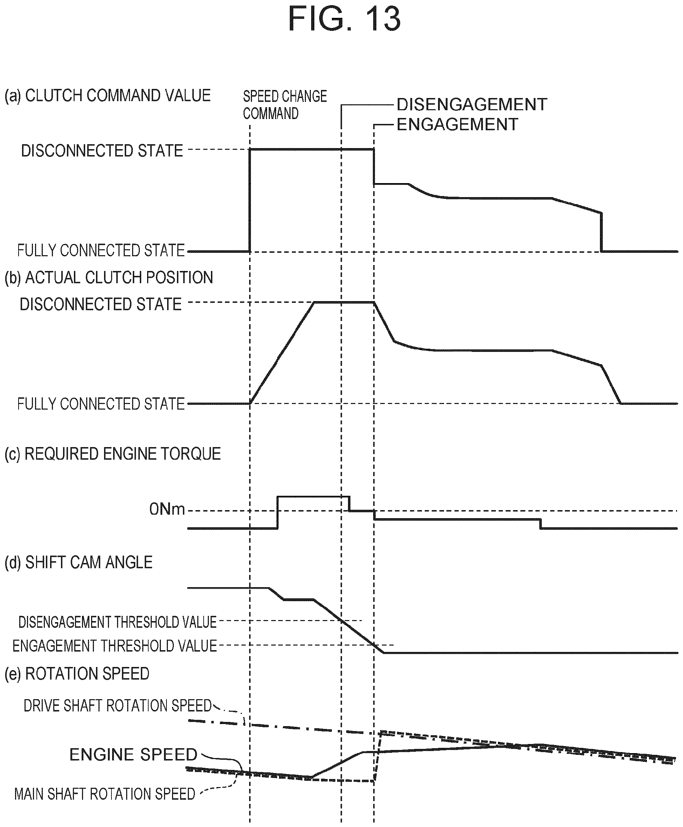

Next, a speed change action in the case where the engine 45 is in the driven state when a speed change command for a downshift is generated will be described. FIG. 13 is a view showing the clutch command value, the actual clutch position, the required engine torque, the shift cam angle, the drive shaft rotation speed, the engine speed, and the main shaft rotation speed in the case where the motive power source is in the driven state when a speed change command for a downshift is generated.

As shown in FIG. 13, in the dog clutch-type speed change device 50, when a speed change command for a downshift is generated, the control device 90 starts the disconnection control of the clutch 44 and controls the clutch actuator 60 so as to put the clutch 44 in the disconnected state. Further, the control device 90 controls the motive power source-torque adjustment device 80 so as to start increasing the torque of the engine 45. While the clutch 44 is in the disconnected state, the control device 90 controls the engine torque so as to become a positive torque to thereby bring the engine speed close to the drive shaft rotation speed. Then, after the driving dog and the driven dog of the current stage of speed are disengaged, the control device 90 controls the engine torque so as to be 0 Nm or a torque near 0 Nm. When the driving dog and the driven dog of the next stage of speed are engaged, the control device 90 controls the clutch 44 into the partially connected state such that a predetermined engine brake driving force can be obtained, and controls the engine torque so as to be a negative torque slightly lower than 0 Nm. Here, when the engine 45 is in the driven state, since the torque of the engine 45 cannot be reduced, as shown in FIG. 13, the clutch is put in the disconnected state to promote dog disengagement of disengaging the driving dog and the driven dog. Then, even when partial engagement (half-meshing) of the driving dog and the driven dog occurs in the course of the engaging action of engaging the driving dog and the driven dog, the torque of the engine 45 cannot be reduced to eliminate that partial engagement. Therefore, the clutch is maintained in a disconnected connection state during the course of the engaging action of the driving dog and the driven dog. On the other hand, when the engine 45 is in the low-speed, low-torque driving force state, as shown in FIG. 12, the clutch 44 is put in the disconnected state to promote dog disengagement of disengaging the driving dog and the driven dog. Then, after the dog disengagement, the clutch is put in the partially connected state to restore the driving force early after engagement of the driving dog and the driven dog. Specifically, in this embodiment, the control device 90 controls the motive power source-torque adjustment device 80 such that the torque maximum fluctuation range of the engine when the engine 45 is in the driving state, for example, the high-speed, high-torque driving force state and/or the low-speed, low-torque driving force state (FIG. 11 (c), FIG. 12 (c)) becomes wider than the torque maximum fluctuation range of the engine when the engine 45 is in the driven state (FIG. 13 (c)), during the period from the start of the dog disengaging action of the driving dog and the driven dog of the current stage of speed until the completion of the dog engaging action of the driving dog and the driven dog of the next stage of speed. Here, the torque maximum fluctuation range is a range of fluctuation between the maximum value and the minimum value of the engine torque. In this embodiment, the control device 90 controls the clutch actuator 60 such that the clutch disconnection ratio when the engine 45 is in the driving state, for example, the low-speed, low-torque driving force state and/or the high-speed, high-torque driving force state becomes lower than the clutch disconnection ratio when the engine 45 is in the driven state, during the period from the start of the dog disengaging action of the driving dog and the driven dog of the current stage of speed until the completion of the dog engaging action of the driving dog and the driven dog of the next stage of speed. In this embodiment, the control device 90 may control the clutch actuator 60 such that the clutch-transmitted torque when the engine 45 is in the driving state, for example, the high-speed, high-torque driving force state and/or the low-speed, low-torque driving state becomes higher than the clutch-transmitted torque when the engine 45 is in the driven state, during the period from the start of the dog disengaging action of the driving dog and the driven dog of the current stage of speed until the completion of the dog engaging action of the driving dog and the driven dog of the next stage of speed, particularly during the dog engagement of the driving dog and the driven dog of the next stage of speed.

Thus, in the dog clutch-type speed change device 50 of this embodiment, the control device 90 may control both the clutch actuator 60 and the motive power source-torque adjustment device 80 upon receiving a downshift command such that the action pattern of the clutch 44 in the driving state differs from the action pattern of the clutch 44 in the driven state, and such that the adjustment pattern of the torque of the engine 45 in the driving state differs from the adjustment pattern of the torque of the engine 45 in the driven state, during the period from the start of the dog disengaging action of the driving dog and the driven dog of the current stage of speed until the completion of the dog engaging action of the driving dog and the driven dog of the next stage of speed. According to this embodiment, the forms of control of both the control of the clutch and the torque control of the engine are changed from the dog disengagement until the dog engagement according to whether the motive power source is in the driving state or the driven state. Thus, regardless of which state of the driving state and the driven state the engine 45 is in, effective disengagement of the dogs and effective elimination of dog contact or partial engagement of the dogs during a speed change can be realized to thereby shorten the driving-absent period.

In the dog clutch-type speed change device 50 of this embodiment, in a case where the temporal ratio of the disconnected state of the clutch 44 to the forms of connection of the clutch 44 including the fully connected state and the partially connected state during the period from the start of the dog disengaging action of the driving dog and the driven dog of the current stage of speed until the completion of the dog engaging action of the driving dog and the driven dog of the next stage of speed is defined as the clutch disconnection ratio, and the maximum range of fluctuation of the torque of the engine 45 during the period from the start of the dog disengaging action of the driving dog and the driven dog of the current stage of speed until the completion of the dog engaging action of the driving dog and the driven dog of the next stage of speed is defined as the torque maximum fluctuation range, the control device 90 may control both the clutch actuator 60 and the motive power source-torque adjustment device 80 upon receiving a downshift command such that the clutch disconnection ratio in the driving state becomes lower than the clutch disconnection ratio in the driven state, and such that the torque maximum fluctuation range in the driving state becomes wider than the torque maximum fluctuation range in the driven state, during the period from the start of the dog disengaging action of the driving dog and the driven dog of the current stage of speed until the completion of the dog engaging action of the driving dog and the driven dog of the next stage of speed.

In the dog clutch-type speed change device 50 of this embodiment, the control device 90 may control both the clutch actuator 60 and the motive power source-torque adjustment device 80 upon receiving a downshift command such that the action pattern of the clutch 44 in the driving state differs from the action pattern of the clutch 44 in the driven state, and such that the adjustment pattern of the torque of the motive power source in the driving state differs from the adjustment pattern of the torque of the motive power source in the driven state, during the period of the dog engaging action of the driving dog and the driven dog of the next stage of speed.

The dog clutch-type speed change device 50 according to this embodiment is not limited to the above-described aspects and various changes can be made thereto.

### Reference Signs List

- 1: Motorcycle
- 3: Head pipe
- 4: Steering handlebar
- 5: Rear arm bracket
- 6: Vehicle body frame
- 6a: Frame part
- 10: Front fork
- 12: Front wheel
- 13: Fuel tank
- 14: Seat
- 20: Power unit
- 21: Rear arm
- 22: Pivot shaft
- 23: Rear wheel
- 25: Crankshaft
- 26: Crank case
- 38: Potentiometer
- 39: Potentiometer
- 41: Main shaft
- 42: Drive shaft
- 43: Shift mechanism
- 44: Clutch
- 45: Motive power source, engine
- 47: Power transmission mechanism
- 48: Transmission
- 49: Speed change gear
- 49a: First gear
- 49b: Second gear
- 49c: Engaging protrusion
- 49d: Groove
- 49e: Engaging recess
- 49f: Axial end surface
- 49g: Insertion hole
- 49h: Insertion hole
- 50: Dog clutch-type speed change device
- 60: Clutch actuator
- 61: Intake pipe
- 62: Exhaust pipe
- 63: Accelerator
- 65: Throttle valve
- 66: Fuel supply device
- 67: Ignition device
- 70: Shift actuator
- 72: Shift switch
- 72a: Upshift switch
- 73: Power source device
- 74: Main switch
- 75: Shift rod
- 80: Motive power source-torque adjustment device
- 90: Control device
- 91: Switching determination unit
- 92: Driving state detection unit
- 93: Semi-automatic control unit
- 94: Fully automatic control unit
- 310: Gear
- 420: Speed change gear
- 421: Shift cam
- 421a: Cam groove
- 422: Shift fork
- 441: Gear
- 442: Plate group
- 443: Clutch housing
- 445: Friction plate
- 447: Clutch boss
- 449: Clutch plate
- 450: Spring
- 451: Pressure plate
- 451B: Pressing part
- 455: Push rod
- 457: Bearing
- 459: Ball
- 461: Push rod
- 461A: One end portion
- 463: Piston
- 465: Cylinder main body
- 467: Space

## Claims

1. A dog clutch-type speed change control device comprising:
a clutch that is configured to, in a fully connected state, transmit a torque from a motive power source to a main shaft as a clutch friction member is pressed, in a partially connected state, transmits the torque as the clutch friction member is pressed with a pressing force lower than a pressing force in the fully connected state, and in a disconnected state, interrupts the torque transmission from the motive power source to the main shaft;
a clutch actuator that is configured to control the clutch;
a transmission that is configured to switch gears that are configured to transmit the torque between the main shaft and a drive shaft by a dog engaging action of engaging a driving dog and a driven dog and a dog disengaging action of disengaging the driving dog and the driven dog;
a motive power source-torque adjustment device that is configured to adjust the torque of the motive power source; and
a control device that is configured to control the clutch actuator and the motive power source-torque adjustment device, wherein:
the clutch actuator is configured to perform action patterns including at least making the state of the clutch transition from the fully connected state to the partially connected state or the disconnected state; and
in a case where a high-speed, high-torque driving force state where, before the control device receives a speed change command and starts controlling the clutch actuator and the motive power source-torque adjustment device, the motive power source is driving the drive shaft and a speed or an output torque of the motive power source is high, and a low-speed, low-torque driving force state where, before the control device receives a speed change command and starts controlling the clutch actuator and the motive power source-torque adjustment device, the motive power source is driving the drive shaft and the speed or the output torque of the motive power source is low relative to that in the high-speed, high-torque driving force state are defined,
the control device is configured to control both the clutch actuator and the motive power source-torque adjustment device upon receiving an upshift command such that an action pattern of the clutch in the high-speed, high-torque driving force state differs from an action pattern of the clutch in the low-speed, low-torque driving force state, and such that an adjustment pattern of the torque of the motive power source in the high-speed, high-torque driving force state differs from an adjustment pattern of the torque of the motive power source in the low-speed, low-torque driving force state, during a period from start of a dog disengaging action of the driving dog and the driven dog of a current stage of speed until completion of a dog engaging action of the driving dog and the driven dog of a next stage of speed.

2. The dog clutch-type speed change device according to claim 1, wherein
in a case where a temporal ratio of the disconnected state of the clutch to forms of connection of the clutch including the fully connected state and the partially connected state during the period from the start of the dog disengaging action of the driving dog and the driven dog of the current stage of speed until the completion of the dog engaging action of the driving dog and the driven dog of the next stage of speed is defined as a clutch disconnection ratio,
the control device is configured to control both the clutch actuator and the motive power source-torque adjustment device upon receiving an upshift command such that the clutch disconnection ratio in the high-speed, high-torque driving force state becomes lower than the clutch disconnection ratio in the low-speed, low-torque driving force state during the period from the start of the dog disengaging action of the driving dog and the driven dog of the current stage of speed until the completion of the dog engaging action of the driving dog and the driven dog of the next stage of speed.

3. The dog clutch-type speed change device according to claim 1 or 2, wherein:
in a case where the motive power source is driving the drive shaft before the control device receives a speed change command and starts controlling the clutch actuator and the motive power source-torque adjustment device is defined as a driving state, and further a case where the motive power source is being driven by the drive shaft before the control device receives a speed change command and starts controlling the clutch actuator and the motive power source-torque adjustment device is defined as a driven state; and
the control device is configured to control both the clutch actuator and the motive power source-torque adjustment device upon receiving an upshift command such that an action pattern of the clutch in the driving state differs from the clutch pattern in the driven state, and such that an adjustment pattern of the torque of the motive power source in the driving state differs from an adjustment pattern of the torque of the motive power source in the driven state, during the period from the start of the dog disengaging action of the driving dog and the driven dog of the current stage of speed until the completion of the dog engaging action of the driving dog and the driven dog of the next stage of speed.

4. The dog clutch-type speed change device according to claim 3, wherein
in a case where a temporal ratio of the disconnected state of the clutch to forms of connection of the clutch including the fully connected state and the partially connected state during the period from the start of the dog disengaging action of the driving dog and the driven dog of the current stage of speed until the completion of the dog engaging action of the driving dog and the driven dog of the next stage of speed is defined as a clutch disconnection ratio, and a maximum range of fluctuation of the torque of the motive power source during the period from the start of the dog disengaging action of the driving dog and the driven dog of the current stage of speed until the completion of the dog engaging action of the driving dog and the driven dog of the next stage of speed is defined as a torque maximum fluctuation range,
the control device is configured to control both the clutch actuator and the motive power source-torque adjustment device upon receiving an upshift command such that the clutch disconnection ratio in the driving state becomes lower than the clutch disconnection ratio in the driven state, and such that the torque maximum fluctuation range in the driving state becomes wider than the torque maximum fluctuation range in the driven state, during the period from the start of the dog disengaging action of the driving dog and the driven dog of the current stage of speed until the completion of the dog engaging action of the driving dog and the driven dog of the next stage of speed.

5. The dog clutch-type speed change device according to either claim 3 or 4, wherein the control device is configured to control both the clutch actuator and the motive power source-torque adjustment device upon receiving an upshift command such that an action pattern of the clutch in the driving state differs from an action pattern of the clutch in the driven state, and such that an adjustment pattern of the torque of the motive power source in the driving state differs from an adjustment pattern of the torque of the motive power source in the driven state, during a period of the dog engaging action of the driving dog and the driven dog of the next stage of speed.

6. The dog clutch-type speed change device according to claim 5, wherein the control device is configured to control both the clutch actuator and the motive power source-torque adjustment device upon receiving an upshift command such that a clutch-transmitted torque that is transmitted through the clutch in the driving state becomes a torque-transmitted torque that is positive and higher than the clutch-transmitted torque in the driven state, and such that the torque of the motive power source in the driving state becomes a torque that is positive and higher than the torque of the motive power source in the driven state, during the period of the dog engaging action of the driving dog and the driven dog of the next stage of speed.

7. The dog clutch-type control device according to any one of claims 1 to 6, wherein the control device is configured to control both the clutch actuator and the motive power source-torque adjustment device upon receiving a downshift command such that an action pattern of the clutch in the driving state differs from an action pattern of the clutch in the driven state, and such that an adjustment pattern of the torque of the motive power source in the driving state differs from an adjustment pattern of the torque of the motive power source in the driven state, during the period from the start of the dog disengaging action of the driving dog and the driven dog of the current stage of speed until the completion of the dog engaging action of the driving dog and the driven dog of the next stage of speed.

8. The dog clutch-type speed change device according to claim 7, wherein
in a case where a ratio of the disconnected state of the clutch to forms of connection of the clutch including the fully connected state and the partially connected state during the period from the start of the dog disengaging action of the driving dog and the driven dog of the current stage of speed until the completion of the dog engaging action of the driving dog and the driven dog of the next stage of speed is defined as a clutch disconnection ratio, and a maximum range of fluctuation of the torque of the motive power source during the period from the start of the dog disengaging action of the driving dog and the driven dog of the current stage of speed until the completion of the dog engaging action of the driving dog and the driven dog of the next stage of speed is defined as a torque maximum fluctuation range,
the control device is configured to control both the clutch actuator and the motive power source-torque adjustment device upon receiving a downshift command such that the clutch disconnection ratio in the driving state becomes lower than the clutch disconnection ratio in the driven state, and such that the torque maximum fluctuation range in the driving state becomes wider than the torque maximum fluctuation range in the driven state, during the period from the start of the dog disengaging action of the driving dog and the driven dog of the current stage of speed until the completion of the dog engaging action of the driving dog and the driven dog of the next stage of speed.

9. The dog clutch-type speed change device according to either claim 7 or 8, wherein the control device is configured to control both the clutch actuator and the motive power source-torque adjustment device upon receiving a downshift command such that an action pattern of the clutch in the driving state differs from an action pattern of the clutch in the driven state, and such that an adjustment pattern of the torque of the motive power source in the driving state differs from an adjustment pattern of the torque of the motive power source in the driven state, during a period of the dog engaging action of the driving dog and the driven dog of the next stage of speed.
